(19) **Europäisches Patentamt**

**European Patent Office**

**Office européen des brevets**

(11) **EP 1 336 223 B1**

(12) **EUROPÄISCHE PATENTSCHRIFT**

(45) Veröffentlichungstag und Bekanntmachung des Hinweises auf die Patenterteilung:
**01.02.2006 Patentblatt 2006/05**

(51) Int Cl.:
*H01Q 3/26* (2006.01)     *H01Q 1/24* (2006.01)
*H04B 7/06* (2006.01)

(21) Anmeldenummer: **01997864.2**

(22) Anmeldetag: **15.11.2001**

(86) Internationale Anmeldenummer:
**PCT/DE2001/004291**

(87) Internationale Veröffentlichungsnummer:
**WO 2002/043184 (30.05.2002 Gazette 2002/22)**

(54) **VERFAHREN UND VORRICHTUNG ZUR FEEDBACK- ÜBERTRAGUNG IN EINEM FUNK-KOMMUNIKATIONSSYSTEM**

METHOD AND DEVICE FOR FEEDBACK TRANSMISSION IN A RADIO COMMUNICATION SYSTEM

PROCEDE ET DISPOSITIF DE TRANSFERT EN RETOUR DANS UN SYSTEME DE RADIOCOMMUNICATION

(84) Benannte Vertragsstaaten:
**DE FR GB**

(30) Priorität: **23.11.2000 DE 10058060**

(43) Veröffentlichungstag der Anmeldung:
**20.08.2003 Patentblatt 2003/34**

(73) Patentinhaber: **SIEMENS AKTIENGESELLSCHAFT**
**80333 München (DE)**

(72) Erfinder:
• **WIEDMANN, Ralf**
  **81369 München (DE)**
• **LOBINGER, Andreas**
  **83714 Miesbach (DE)**
• **RAAF, Bernhard**
  **81475 München (DE)**
• **SEEGER, Alexander**
  **85622 Feldkirchen (DE)**

(56) Entgegenhaltungen:
EP-A- 0 999 658     WO-A-01/91323
WO-A-01/91329     WO-A-02/03565
WO-A-02/03569     GB-A- 2 313 261

## EP 1 336 223 B1

**Beschreibung**

Die vorliegende Erfindung betrifft Verfahren zur Übertragung von Rückkopplungsinformation für die Strahlformung in einem Funk-Kommunikationssystem mit einer Basisstation, deren zugeordnete Antenneneinrichtung mehrere Antennenelemente aufweist, so dass eine räumliche Auflösung bei der Strahlformung möglich ist, und einer Mehrzahl von Teilnehmerstationen. Sie betrifft ferner Teilnehmerstationen, die zur Anwendung in dem Verfahren geeignet sind.

In Funk-Kommunikationssystemen werden Nachrichten (Sprache, Bildinformation oder andere Daten) über Übertragungskanäle mit Hilfe von elektromagnetischen Wellen (Funkschnittstelle) übertragen. Die Übertragung erfolgt sowohl in Abwärtsrichtung (downlink) von der Basisstation zu der Teilnehmerstation, als auch in Aufwärtsrichtung (uplink) von der Teilnehmerstation zur Basisstation.

Signale, die mit den elektromagnetischen Wellen übertragen werden, unterliegen bei ihrer Ausbreitung in einem Ausbreitungsmedium u.a. Störungen durch Interferenzen. Störungen durch Rauschen können u.a. durch Rauschen der Eingangsstufe des Empfängers entstehen. Durch Beugungen und Reflexionen durchlaufen Signalkomponenten verschiedene Ausbreitungswege. Dies hat zum einen die Folge, daß ein Signal mehrfach, jeweils aus unterschiedlichen Richtungen, mit unterschiedlichen Verzögerungen, Dämpfungen und Phasenlagen, am Empfänger ankommen kann, und zum anderen können sich Beiträge des Empfangssignals kohärent mit wechselnden Phasenbeziehungen beim Empfänger überlagern und dort zu Auslöschungseffekten auf einem kurzfristigen Zeitmaßstab (fast fading) führen.

Aus DE 598 02 725 D ist bekannt, intelligente Antennen (smart antennas), d. h. Antennenanordnungen mit mehreren Antennenelementen, zu nutzen, um die Übertragungskapazität in Aufwärtsrichtung zu erhöhen. Diese ermöglichen eine gezielte Ausrichtung des Antennengains in eine Richtung, aus der das Uplinksignal kommt.

Aus A.J.Paulraj, C.B.Papadias, "Space-time processing for wireless communications", IEEE Signal Processing Magazine, Nov. 1997, S.49-83, sind verschiedene Verfahren zur räumlichen Signaltrennung für Auf- und Abwärtsrichtung bekannt.

Für die Abwärtsrichtung, also von Basisstation zur Teilnehmerstation, treten besondere Schwierigkeiten auf, da die Strahlformung vor der Beeinflussung der übertragenen Signale durch den Funkkanal vorzunehmen ist. Aus R. Schmalenberger, J.J. Blanz, "A comparison of two different algorithms for multi antenna C/I balancing", Proc. 2$^{nd}$ European Personal Mobile Communications Conference (EPMCC), Bonn, Germany, Sept. 1997, S.483-490, ist ein Algorithmus der Strahlformung in Abwärtsrichtung bekannt, wobei ein direkter Ausbreitungspfad (Sichtverbindung) zwischen den Basisstationen und den Teilnehmerstationen und eine iterative Berechnung von Strahlformungsvektoren vorausgesetzt wird. Mit jeder Änderung der Eigenschaften des Übertragungskanals muß die gesamte aufwendige iterative Berechnung wiederholt werden.

Aus DE 198 03 188 A ist ein Verfahren bekannt, wobei eine räumliche Kovarianzmatrix für eine Verbindung von einer Basisstation zu einer Teilnehmerstation bestimmt wird. In der Basisstation wird ein Eigenvektor aus der Kovarianzmatrix berechnet und für die Verbindung als ein Strahlformungsvektor verwendet. Die Sendesignale für die Verbindung werden mit dem Strahlformungsvektor gewichtet und Antennenelementen zur Abstrahlung zugeführt. Intrazell-Interferenzen werden aufgrund der Verwendung von Joint-Detection, beispielsweise in den Endgeräten, in die Strahlformung nicht einbezogen und eine Verfälschung der empfangenen Signale durch Interzell-Interferenzen wird vernachlässigt.

Anschaulich gesprochen ermittelt dieses Verfahren in einer Umgebung mit Mehrwegausbreitung einen Ausbreitungsweg mit guten Übertragungseigenschaften und konzentriert die Sendeleistung der Basisstation räumlich auf diesen Ausbreitungsweg. Dadurch kann jedoch nicht verhindert werden, daß Interferenzen auf diesem Übertragungsweg kurzfristig zu Signalauslöschungen und somit zu Unterbrechungen der Übertragung führen können.

Die Empfehlungen des 3GPP (3$^{rd}$ Generation Partnership Project, http://www.3gpp.org) sehen deshalb Verfahren vor, bei denen die Teilnehmerstation eine kurzfristige Kanalimpulsantwort $h_m$ des Kanals vom m-ten Antennenelement zur Teilnehmerstation schätzt und Gewichtungsfaktoren $W_m$ berechnet, mit denen das Sendesignal vor Abstrahlung durch das m-te Antennenelement gewichtet werden soll. Entsprechende Konzepte sind auch in M. Raitola, A. Hottinen und R. Wichmann, "Transmission diversity in wideband CDMA", erschienen in Proc. 49$^{th}$ IEEE Vehicular Technology Conf. Spring (VTC '99 Spring), S. 1545-1549, Houston, Texas 1999, behandelt.

Ein schwerwiegendes Problem dieser Vorgehensweise ist, daß der von der Teilnehmerstation abgeschätzte Vektor der Gewichtungsfaktoren an die Basisstation übertragen werden muß, und daß hierfür gemäß den Empfehlungen des 3GPP nur eine geringe Bandbreite von einem Bit pro Zeitschlitz (slot) zur Verfügung steht. Die Vektoren können daher nur grob quantisiert übertragen werden. Wenn sich der Kanal schnell ändert und die Gewichtungen von einem Zeitschlitz zum anderen aktualisiert werden müssen, sind lediglich zwei verschiedene relative Phasenlagen der Antennenelemente einstellbar. Wenn der Kanal sich langsamer ändert und z. B. vier Zeitschlitze zum Übertragen des Vektors zur Verfügung stehen, sind immerhin 16 verschiedene Werte des Vektors darstellbar.

Die bekannten Konzepte stoßen jedoch an ihre Grenzen, wenn die Zahl der Antennenelemente der Basisstation größer als zwei ist, denn die zum Übertragen des Vektors benötigte Bandbreite nimmt mit dessen Komponentenzahl, d. h. mit der Zahl der Antennenelemente zu. Das bedeutet: eine große Zahl von Antennenelementen wäre zwar einerseits wünschenswert, um den Sendestrahl möglichst genau ausrichten zu können, andererseits kann infolge der begrenzten verfügbaren Bandbreite der Gewichtungsvektor nicht so oft aktualisiert werden, wie dies zur Anpassung an das schnelle Fading erforderlich wäre.

Der Erfindung liegt die Aufgabe zugrunde, Verfahren zur Feedback-Übertragung in einem Funk-Kommunikationssystem der oben beschriebenen Art und zum Einsatz in einem solchen System geeignete Teilnehmerstationen anzugeben, die eine fortlaufende Aktualisierung der von der Basisstation verwendeten Gewichtungsvektoren mit einer hohen, an die Geschwindigkeit der Änderungen der Gewichtungsvektoren angepaßten Genauigkeit bei gleichzeitig minimaler Inanspruchnahme von Uplink-Bandbreite für die Aktualisierung der Gewichtungsvektoren ermöglichen.

Die Aufgabe wird gelöst durch ein Verfahren mit den Merkmalen des Anspruchs 1 bzw. des Anspruchs 22 sowie eine Teilnehmerstation mit den Merkmalen des Anspruchs 21 bzw. 25.

Die Komponenten eines solchen Gewichtungsvektors können an der Teilnehmerstation abgeschätzt werden. Die Art und Weise einer solchen Abschätzung ist nicht Gegenstand der vorliegenden Erfindung, so dass hier nicht genauer auf sie eingegangen werden muss. Um die nachfolgende Beschreibung leichter verständlich zu machen, wird im folgenden zwischen Steuervektoren und Gewichtungsvektoren unterschieden, wobei ein Steuervektor das Ergebnis einer Abschätzung durch die Teilnehmerstation ist, und ein Gewichtungsvektor ein Vektor ist, dessen Komponenten von der Basisstation zum Ansteuern ihrer Antennenelemente verwendet werden. Man kann sagen, dass in der Terminologie der vorliegenden Anmeldung ein Steuervektor durch seine Übertragung von der Teilnehmerstation zur Basisstation zum Gewichtungsvektor wird.

Die vorliegende Erfindung basiert nun auf der Einsicht, dass es zum Steuern der Strahlformung lediglich darauf ankommt, dass die Richtung eines Steuervektors, d.h. das relative Verhältnis seiner (gegebenenfalls komplexwertigen) Komponenten korrekt an die Basisstation übertragen wird, und dass der Betrag eines solchen Vektors auf die Strahlformung durch die Basisstation keinen Einfluss hat und deshalb auch nicht übertragen werden muss bzw. willkürlich nach Zweckmäßigkeitsgesichtspunkten festgelegt werden kann. Des weiteren ändern sich die Komponenten eines Steuervektors nur langsam im Laufe der Zeit, so dass die zur Aktualisierung des Gewichtungsvektors an die Basisstation zu übertragende Datenmenge auch dadurch reduziert werden kann, dass anstelle der numerischen Werte von Komponenten, die groß sein und eine Vielzahl von Bits umfassen können, lediglich eine für die Änderung des Steuervektors repräsentative Information übertragen werden muss, die mit einer wesentlich geringeren Bitzahl auskommt.

Diese Information kann die Form eines Vektors der arithmetischen Differenzen zwischen den Komponenten des abgeschätzten Steuervektors und eines Referenz-Steuervektors haben. In diesem Fall ist die zum Übertragen einer Differenz zwischen zwei Komponenten bzw. zwei Real- oder Imaginärteilen benötigte Bitzahl kleiner als die, die zum Übertragen der Komponente bzw. des Real- oder Imaginärteils notwendig wäre, ist aber im allgemeinen noch größer als 1.

Vorzugsweise wird der Differenzvektor so diskretisiert, dass für jede Differenz nur ein Bit übrigbleibt, das lediglich das Vorzeichen dieser Differenz angibt. Entsprechend diesem Vorzeichen inkrementiert oder dekrementiert die Basisstation die entsprechende Kopmponente des Gewichtungsvektors um einen vorgegebenen Wert x.

Die Richtungsänderung eines Vektors, die erzielt werden kann, indem zu jedem seiner Komponenten +x oder -x addiert wird, ist abhängig vom Betrag dieses Vektors. Daher ist es zweckmäßig, dem Steuervektor einen Betrag zuzuordnen, der um so kleiner ist, je schneller sich die Richtung des Steuervektors im Laufe der Zeit ändert. Dadurch ist es möglich, bei einer schnell bewegten Teilnehmerstation, deren Steuervektor seine Richtung schnell ändern kann, mit einer kleinen Zahl von Anpassungsschritten, in denen jeweils +x oder -x addiert wird, eine befriedigende Übereinstimmung zwischen dem von der Teilnehmerstation abgeschätzten tatsächlichen Wert eines Steuervektors und dem von der Basisstation zum Übertragen an die Teilnehmerstation verwendeten Wert des Gewichtungsvektors herzustellen. Andererseits kann, wenn sich der Steuervektor nur langsam ändert, etwa weil die Teilnehmerstation sich nur langsam bewegt oder stationär ist, die Richtung des Steuervektors mit einer sehr hohen Auflösung bestimmt und an die Basisstation übertragen werden, weil bei einem großen Betrag des Steuervektors bzw. des Gewichtungsvektors eine Anpassung der Richtung des Gewichtungsvektors anhand der übertragenen Differenz nur eine geringe Richtungsänderung bewirkt.

Es gibt mehrere Möglichkeiten, den Betrag des Steuer- bzw. Gewichtungsvektors an die Änderungsgeschwindigkeit seiner Richtung anzupassen. Eine erste Möglichkeit ist, dass Basisstation und Teilnehmerstation unabhängig voneinander die Änderungsgeschwindigkeit z.B. rechnerisch ermitteln und jeweils anhand einer gleichen Vorschrift den Betrag als Funktion der Änderungsgeschwindigkeit festlegen. Denkbar ist auch, den Betrag jeweils mit Hilfe der Differenzen festzulegen, indem unter mehreren möglichen Differenzen, die zu einer gewünschten Richtungsänderung führen, jeweils in Abhängigkeit von der Änderungsgeschwindigkeit eine gewählt wird, die den Betrag des Steuervektors verringert oder erhöht.

Eine ähnlich feinfühlige Regelung der Richtung des Steuervektors läßt sich erreichen, wenn anstelle der Anpassung des Vektorbetrages das Ausmaß der Anpassung des Gewichtungsvektors durch eine gegebene Differenz um so größer festgelegt wird, je schneller sich die Richtung des Steuervektors ändert.

Der Referenz-Steuervektor, der zur Abschätzung der Richtungsänderung des Steuervektors in Schritt b dient, kann in einer früheren Periode des Verfahrens im Schritt a als Steuervektor erhalten worden sein. Ein solcher Referenz-Steuervektor ist dann geeignet, wenn die an die Basisstation übertragene repräsentative Information Zahlenwerte der Differenzen der einzelnen Komponenten von abgeschätztem Steuervektor und Referenz-Steuervektor enthält, so dass mit jeder Übertragung dieser Information der Gewichtungsvektor mit dem abgeschätzten Steuervektor in Übereinstimmung gebracht werden kann.

Besonders bevorzugt ist, dass der Referenz-Steuervektor ein gespiegeltes Abbild des Gewichtungsvektors ist, das an der Teilnehmerstation vorgehalten wird, wobei der Referenz-Steuervektor anhand der für die Richtungsänderung representativen Information in der gleichen Weise wie an der Basisstation der Gewichtungsvektor angepasst wird, um auf diese Weise die Übereinstimmung zwischen beiden aufrechtzuerhalten. Dies ist besonders zweckmäßig, wenn nur das Vorzeichen der Änderungen der einzelnen Komponenten an die Basisstation übertragen wird, da dann mit vorübergehenden Abweichungen zwischen abgeschätzten Steuervektor und Gewichtungsvektor zu rechnen ist.

Wenn immer nur Änderungen der Richtung des Steuervektors von der Teilnehmerstation zur Basisstation übertragen werden, so führen Fehler bei der Übertragung zu Diskrepanzen zwischen dem Referenz-Steuervektor und dem Gewichtungsvektor, die die Empfangsqualität der Teilnehmerstation beeinträchtigen können. Um dieser Gefahr zu begegnen, ist vorzugsweise vorgesehen, dass die Teilnehmerstation eine Abschätzung des von der Basisstation verwendeten Gewichtungsvektors durchführt und im Falle einer Abweichung zwischen diesem Gewichtungsvektor und dem Referenz-Steuervektor letzteren anpasst.

Eine solche Anpassung kann darin bestehen, dass der Referenz-Steuervektor durch den abgeschätzten Gewichtungsvektor ersetzt wird. Da eine solche Abschätzung aber fehlerbehaftet ist, kann es zweckmäßiger sein, den Referenz-Steuervektor nur so zu verändern, dass sich die Differenz zwischen ihm und dem abgeschätzten Gewichtungsvektor verringert.

Eine andere Möglichkeit, Diskrepanzen zwischen dem von der Basisstation verwendeten Gewichtungsvektor und dem Referenz-Steuervektor im Laufe der Zeit zu reduzieren ist, den Steuervektor und den Gewichtungsvektor periodisch mit einem Vergessensfaktor zu multiplizieren. Dieser Vergessensfaktor ist eine reelle Zahl zwischen 0 und 1, vorzugsweise nahe bei 1. Bei einer einfachen Ausgestaltung des Verfahrens kann der Vergessensfaktor eine Konstante sein. Dies führt allerdings dazu, dass der Betrag des Gewichtungsvektors einen Grenzwert, der von dem Wert dieser Konstante abhängt, nicht überschreiten kann. Eine beliebig feine Regelung der Richtung des Steuervektors ist dann nicht möglich. Um diesen Nachteil zu vermeiden, ist es bevorzugt, dass der Vergessensfaktor eine Funktion des Betrages wenigstens eines Steuervektors ist. So kann der Vergessensfaktor zum Beispiel eine Funktion des Betrags des größten von der Basisstation ermittelten Steuervektors oder eine Funktion der Summe der Beträge der berücksichtigten Steuervektoren sein.

Im allgemeinen werden die Komponenten der Steuervektoren und der Gewichtungsvektoren komplexwertig sein. In einem solchen Fall ist es zweckmäßig, für die Komponenten der Steuervektoren und der Gewichtungsvektoren eine Darstellung bestehend aus Betrag und Phase zu verwenden. Dies ermöglicht es nämlich auch bei großen Beträgen der einzelnen Komponenten, deren Phase, die relativ schnellen Änderungen unterliegen kann, mit einer konstanten, fest vorgegebenen Zahl von Änderungsschritten auf einen beliebigen neuen Wert einzustellen.

Um das erfindungsgemäße Verfahren zu initialisieren, muss die Basisstation über Startwerte der Gewichtungsvektoren verfügen. Um solche Startwerte schnell zur Verfügung zu haben, ist es möglich, die Komponenten von von der Teilnehmerstation abgeschätzten Steuervektoren als Zahlenwerte an die Basisstation zur Verwendung als Gewichtungsvektoren zu übertragen. Dabei können im Rahmen der Initialisierung diese Komponenten mit einer geringeren Genauigkeit bzw. Auflösung übertragen werden, als sie von der Teilnehmerstation abgeschätzt werden. Auf diese Weise kann ein sinnvoller Kompromiss zwischen der Genauigkeit der Gewichtungsvektoren und der zu ihrer Übertragung an die Basisstation benötigten Zeit erzielt werden. Wenn sich nach der Initialisierung die Gewichtungsvektoren schnell ändern, wäre durch eine hochauflösende Übertragung nämlich kein wesentlicher Gewinn an Übertragungsqualität zu erzielen gewesen. Wenn hingegen sich die Gewichtungsvektoren nur langsam ändern, können deren Richtungen im Laufe einiger Perioden des erfindungsgemäßen Verfahrens mit hoher Genauigkeit angepasst werden.

Eine alternative Möglichkeit zur Initialisierung ist die, dass Steuervektoren an der Teilnehmerstation und Gewichtungsvektoren an der Basisstation unabhängig voneinander abgeschätzt werden. In diesem Fall ist die Übertragung von Komponenten der Steuervektoren an die Basisstation natürlich überflüssig. Wichtig ist bei dieser Variante, dass die Steuervektoren der Teilnehmerstationen und die Gewichtungsvektoren der Basisstation einander korrekt zugeordnet werden, so dass eine von der Teilnehmerstation gemeldete Änderung eines Steuervektors die entsprechende Änderung des richtigen Gewichtungsvektors an der Basisstation zur Folge hat. Dies kann z.B. dadurch erreicht werden, dass Teilnehmerstation und Basisstation jeweils zu jedem einzelnen Steuer- bzw. Gewichtungsvektor die Übertragungsqualität eines Downlink- bzw. Uplink-Signals beurteilen, das dem jeweiligen Vektor entspricht, und die Vektoren in der Reihenfolge der Übertragungsqualitäten ordnen. Wenn bei der Beurteilung der Übertragungsqualität durch Phasenfluktuationen bedingte kurzfristige Schwankungen ausgemittelt werden, so müssen infolge der Reziprozität der Uplink- und Downlink-Übertragungswege die von Teilnehmerstation und Basisstation erhaltenen Ergebnisse jeweils im wesentlichen die gleichen sein.

Die Tatsache, dass der Betrag der Steuervektoren für die Strahlformung ohne Bedeutung ist, kann auch bei einem Strahlformungsverfahren ausgenutzt werden, bei dem nicht eine für die Änderung eines Steuervektors representative Information an die Basisstation übertragen wird, sondern Zahlenwerte von Komponenten eines solchen Steuervektors. Ein solches Verfahren kann nicht nur zum Initialisieren des oben beschriebenen, auf der Übertragung von Differenzen basierenden Verfahrens eingesetzt werden, sondern auch für sich allein. Nachdem ein von der Teilnehmerstation abgeschätzter Steuervektor anhand einer vorgegebenen Vorschrift normiert worden ist, kann bei der Übertragung der Komponenten dieses Steuervektors an die Basisstation eine Komponente fortgelassen werden, ohne dass dies zu einem Informationsverlust führt. An der Basisstation kann die fehlende Komponente anhand der Normierungsvorschrift wieder hergestellt werden.

Eine solche Normierungsvorschrift kann z.B. die Normierung des Steuervektors auf den Betrag 1 sein. Rechnerisch einfacher zu handhaben ist eine Normierungsvorschrift, bei der eine einzelne, vorgegebene Komponente auf den Wert 1 normiert wird, und die anderen Komponenten des Steuervektors an die Basisstation übertragen werden.

Anders als bei einem auf der Übertragung von Differenzen basierenden Verfahren können hier Fehler bei der Übertragung hochwertiger Bits dazu führen, dass der von der Basisstation verwendete Gewichtungsvektor solange, bis er durch eine erneute Aktualisierung überschrieben wird, empfindlich von dem von der Teilnehmerstation vorgegebenen Steuervektor abweicht. Um diese Gefahr zu reduzieren, kann vorgesehen werden, dass wenigstens das signifikanteste Bit jeder Komponente mehrfach übertragen wird. Diese Übertragung kann z.B. dreifach erfolgen, in diesem Fall kann durch "Mehrheitsentscheid" an der Basisstation festgestellt werden, welcher von verschiedenen empfangenen Werten des signifikantesten Bits der richtige sein dürfte. Besonders bevorzugt ist jedoch, das signifikanteste Bit jeweils nur zweifach zu übertragen. Wenn zwei unterschiedliche Werte des signifikantesten Bits an der Basisstation empfangen werden, kann in diesem Falle durch einen Vergleich mit dem Wert, den die betreffende Komponente in dem in der vorangegangenen Periode des Verfahrens verwendeten Gewichtungsvektor gehabt hat, festgestellt werden, welche der zwei empfangenen Werte voraussichtlich der richtige ist und im neuen Gewichtungsvektor verwendet werden muss.

Weitere Merkmale und Vorteile der Erfindung ergeben sich aus der nachfolgenden Beschreibung von Ausführungsbeispielen. Es zeigen:

Fig. 1        ein Blockschaltbild eines Mobilfunknetzes

Fig. 2        ein Blockschaltbild der Basisstation;

Fig. 3        ein Blockschaltbild der Teilnehmerstation;

Fig. 4        ein Flussdiagramm einer ersten Ausgestaltung des Verfahrens zum Aktualisieren der von der Basisstation verwendeten Gewichtungsvektoren;

Fig. 5        eine Weiterentwicklung des ersten Verfahrens aus Fig. 4;

Fig. 6        mögliche Richtungsänderungen von Gewichtungsvektoren beim Verfahren nach Fig. 5, wenn komplexwertige Komponenten in kartesischer Notation gehandhabt werden;

Fig. 7        mögliche Richtungsänderungen beim Verfahren nach Fig. 5 bei Verwendung einer polaren Notation komplexwertiger Komponenten;

Fig. 8, 9     Abwandlungen des Verfahrens aus Fig. 5;

Fig. 10       Verfahrensschritte zum Korrigieren von Übertragungsfehlern bei der Aktualisierung der Gewichtungsvektoren;

Fig. 11       ein Flussdiagramm einer zweiten Ausgestaltung des Verfahrens, die unter anderem zur Initialisierung der ersten Ausgestaltung einsetzbar ist.

Fig. 12       eine alternative Vorgehensweise zur Initialisierung des Verfahrens nach der ersten Ausgestaltung.

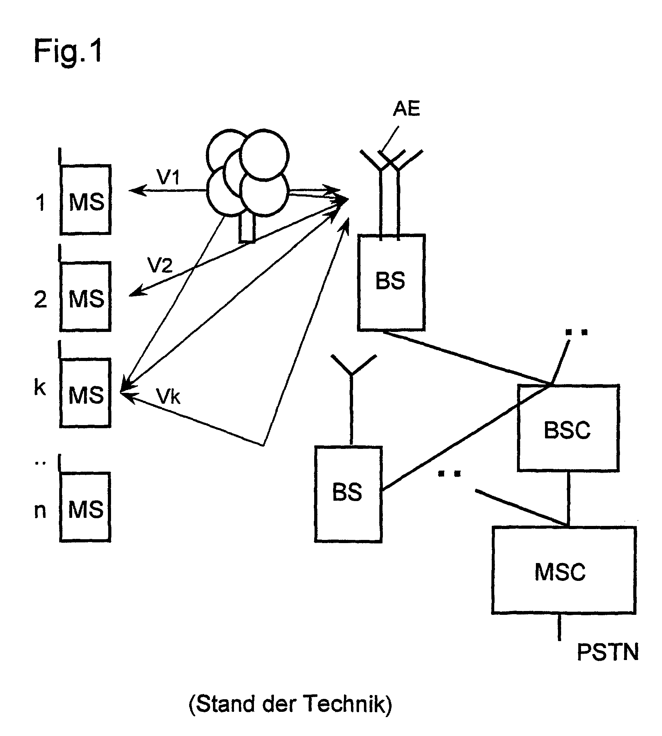

Figur 1 zeigt die Struktur eines Funk-Kommunikationssystems, bei dem das erfindungsgemäße Verfahren anwendbar ist. Es besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS kann über eine Funkschnittstelle eine Nachrichtenverbindung zu Teilnehmerstationen MS aufbauen. Hierfür sind wenigstens einzelne der Basisstationen BS mit Antenneneinrichtungen AE ausgerüstet, die mehrere Antennenelemente (A$_1$ - A$_M$) aufweisen.

In Fig. 1 sind beispielhaft Verbindungen V1, V2, Vk zur Übertragung von Nutzinformationen und Signalisierungsinformationen zwischen Teilnehmerstationen MS1, MS2, MSk, MSn und einer Basisstation BS dargestellt. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

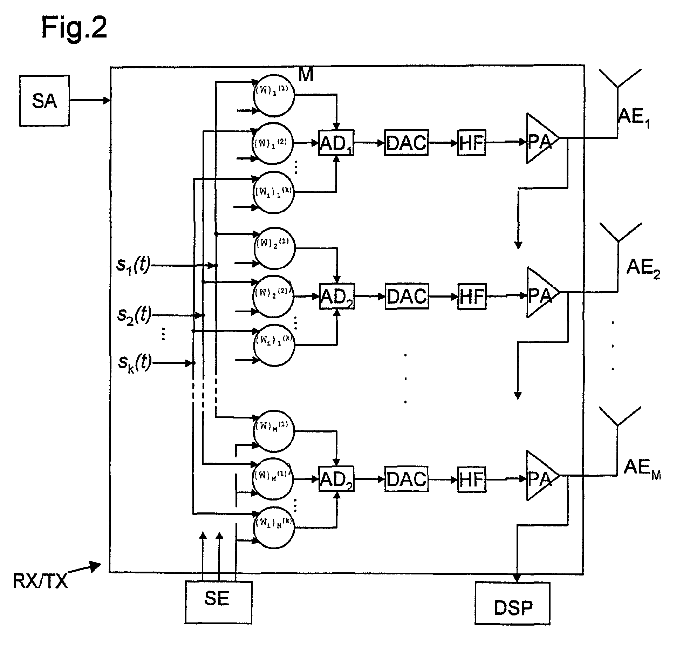

Fig. 2 zeigt schematisch den Aufbau einer Basisstation BS. Eine Signalerzeugungseinrichtung SA stellt das für die Teilnehmerstation MSk bestimmte Sendesignal in Funkblöcken zusammen und ordnet es einem Frequenzkanal TCH zu. Eine Sende/Empfangseinrichtung TX/RX empfängt das Sendesignal s$_k$(t) von der Signalerzeugungseinrichtung SA. Die Sende/Empfangseinrichtung TX/RX umfaßt ein Strahlformungsnetzwerk, in dem das Sendesignal s$_k$(t) für die Teilnehmerstation MSk mit Sendesignalen s$_1$(t), s$_2$(t), ... verknüpft wird, die für andere Teilnehmerstationen bestimmt sind, denen die gleiche Sendefrequenz zugeordnet ist. Das Strahlformungsnetzwerk umfaßt für jedes Sendesignal und jedes Antennenelement einen Multiplizierer M, der das Sendesignal s$_k$(t) mit einer Komponente $(W_i)_j{}^{(k)}$ eines Gewichtungsvektors $(W_i)^{(k)}$ multipliziert, der der empfangenden Teilnehmerstation MSk zugeordnet ist. Die Ausgangssignale der jeweils einem der Antennenelemente AE$_1$, AE$_2$,..., AE$_M$ zugeordneten Multiplizierer M werden von einem Addierer AD$_1$, AD$_2$, ..., AD$_M$ addiert, von einem Digitalanalogwandler DAC analogisiert, auf die Sendefrequenz umgesetzt (HF) und in einem Leistungsverstärker PA verstärkt, bevor sie das Antennenelement AE$_1$, ..., AE$_M$ erreichen. Eine zu dem beschriebenen Strahlformungsnetz analoge Struktur, die in der Figur nicht eigens dargestellt ist, ist zwischen den Antennenelementen AE$_1$, AE$_2$, ..., AE$_M$ und einem digitalen Signalprozessor DSP angeordnet, um das empfangene Gemisch von Uplink-Signalen in die Beiträge der einzelnen Teilnehmerstationen zu zerlegen und diese getrennt dem DSP zuzuführen.

Eine Speichereinrichtung SE enthält zu jeder Teilnehmerstation MSk einen Satz von Gewichtungsvektoren $(W_1)^{(k)}$, $(W_2)^{(k)}$, ..., $(W_m)^{(k)}$, unter denen der von den Multiplizierern M verwendete Gewichtungsvektor $(W_i)^{(k)}$ ausgewählt ist.

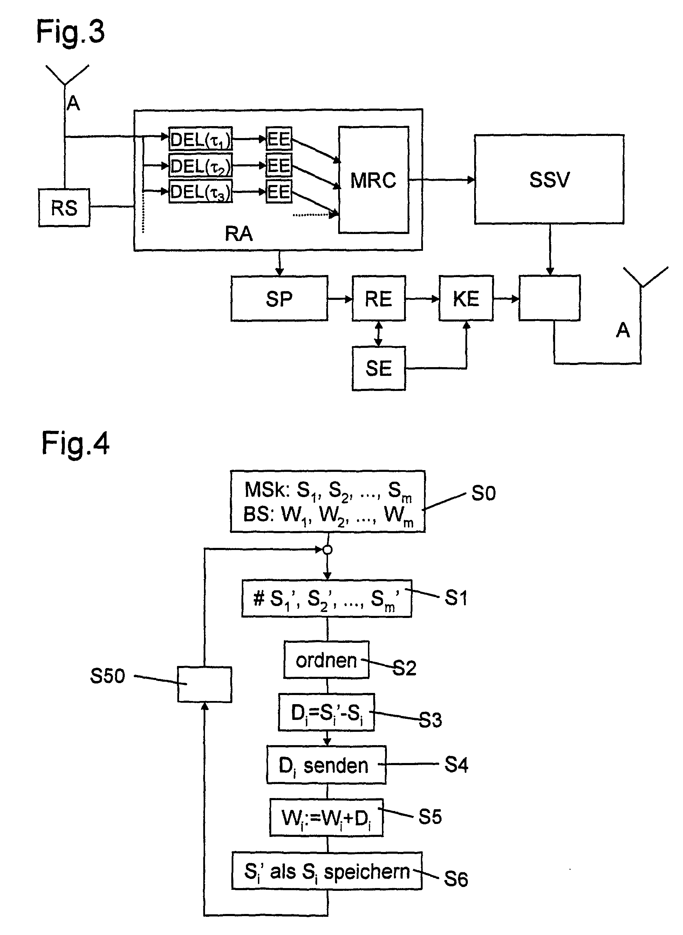

Figur 3 zeigt schematisch den Aufbau einer Teilnehmerstation MSk zur Durchführung einer ersten Ausgestaltung des erfindungsgemäßen Verfahrens. Die Teilnehmerstation MSk umfaßt eine einzige Antenne A, die das von der Basisstation BS ausgestrahlte Downlink-Signal empfängt. Das ins Basisband umgesetzte Empfangssignal von der Antenne A wird einem sogenannten Rake Searcher RS zugeführt, der dazu dient, Laufzeitunterschiede von Beiträgen des Downlink-Signals zu messen, die die Antenne A auf unterschiedlichen Ausbreitungswegen erreicht haben. Das Empfangssignal liegt ferner an einem Rake-Verstärker RA an, der eine Mehrzahl von Rake-Fingern umfaßt, von denen drei in der Figur dargestellt sind, und die jeweils ein Verzögerungsglied DEL und einen Entspreizer-Entscrambler EE aufweisen. Die Verzögerungsglieder DEL verzögern das Empfangssignal jeweils um einen vom Rake-Searcher RS gelieferten Verzögerungswert $\tau_1$, $\tau_2$, $\tau_3$, .... Die Entspreizer-Entscrambler EE liefern an ihren Ausgängen jeweils eine Folge von abgeschätzten Symbolen, wobei die Ergebnisse der Abschätzung für die einzelnen Entscrambler aufgrund unterschiedlicher Phasenlagen des Downlink-Signals zu Entscrambling- und Spreizcode in den einzelnen Fingern des Rake-Verstärkers unterschiedlich sein können.

In den von den Entspreizern-Entscramblern EE gelieferten Symbolfolgen sind auch die Ergebnisse der Abschätzung von Trainingssequenzen enthalten, die von der Basisstation ausgestrahlt werden, und die für jedes Antennenelement der Basisstation quasi-orthogonal und charakteristisch sind. Ein Signalprozessor SP dient zum Vergleich der Ergebnisse der Abschätzung dieser Trainingssequenzen mit den der Teilnehmerstation bekannten, tatsächlich in den Trainingssequenzen enthaltenen Symbole. Anhand dieses Vergleichs kann die Impulsantwort des Übertragungskanals zwischen Basisstation BS und Teilnehmerstation MSk für jeden einzelnen Finger oder Tap ermittelt werden. An die Ausgänge der Entspreizer-Entscrambler EE ist auch ein Maximum Ratio Combiner MRC angeschlossen, der die einzelnen abgeschätzten Symbolfolgen zu einer kombinierten Symbolfolge mit bestmöglichen Signalrauschverhältnis zusammenfügt und diese an eine Sprachsignalverarbeitungseinheit SSV liefert. Die Arbeitsweise dieser Einheit SSV, die die empfangene Symbolfolge in ein für einen Benutzer hörbares Signal umwandelt bzw. empfangene Töne in eine Sendesymbolfolge umsetzt, ist hinlänglich bekannt und braucht hier nicht beschrieben zu werden.

Der Signalprozessor SP ermittelt für jeden Tap einzeln die Impulsantworten eines jeden Antennenelements AE$_1$, ..., AE$_M$ und fügt diese Impulsantworten in der z.B. aus der zitierten DE 198 03 188 bekannten Weise zu einer räumlichen Kovarianzmatrix R$_{xx}$ zusammen. Die Änderungen dieser Kovarianzmatrix $\overline{R_{xx}}$ im Laufe der Zeit spiegeln einerseits die langfristige zeitliche Entwicklung der verschiedenen Übertragungswege zwischen der Basisstation BS und der Teilnehmerstation MSk als auch deren kurzfristige zeitliche Phasenfluktuation wieder. Die Verarbeitung der räumlichen Kovarianzmatrizen in einer Recheneinheit RE der Teilnehmerstation ist detailliert in der am 4. Juli 2000 eingereichten Patentanmeldung der Anmelderin mit dem amtlichen Aktenzeichen 100 32 426.6 publiziert als DE 10032426 A1 beschrieben. Diese Beschreibung wird an dieser Stelle nicht in vollem Umfang wiederholt, da nicht alle ihre Details zum Verständnis der vorliegenden Erfindung von Bedeutung sind. Zum einen wird durch Mittelung über eine Folge der für jede Trainingssequenz des Downlink-Signals einzeln erhaltenen räumlichen Kovarianzmatrizen $\overline{R_{xx}}$ eine gemittelte räumliche Kovarianzmatrix $\overline{R_{xx}}$ erzeugt, und aus dieser gemittelten Kovarianzmatrix werden als Eigenvektoren Steuervektoren bestimmt, die an die Basisstation BS übertragen werden müssen, um dort als Gewichtungsvektoren eingesetzt zu werden. Andererseits werden aus den "kurzfristigen" räumlichen Kovarianzmatrizen $R_{xx}$ zu jedem Steuervektor kurzfristige Eigenwerte bestimmt, die einen Aufschluss über den Beitrag zum Empfangssignal liefern, den ein dem jeweiligen Eigenvektor entsprechender Übertragungsweg leistet. Nachdem die Gewichtungsvektoren an die Basisstation BS übertragen worden sind, braucht die Teilnehmerstation MSk lediglich noch anhand der kurzfristigen Eigenwerte denjenigen Steuervektor bzw. eine Kombination von Steuervektoren zu ermitteln, die ihr den besten Empfang ermöglicht, und eine Information über die ausgewählten Vektoren an die Basisstation BS zu übermitteln, damit diese den entsprechenden Gewichtungsvektor oder eine Kombination von Gewichtungsvektoren anschließend zum Senden des Downlink-Signals an die Teilnehmerstation MSk einsetzt.

Da sich infolge der Bewegung einer Teilnehmerstation die Komponenten der Steuervektoren im Laufe der Zeit ändern können, ist es von Zeit zu Zeit notwendig, die von der Basisstation BS verwendeten Gewichtungsvektoren an die von der Teilnehmerstation bestimmten Steuervektoren anzupassen. Die vorliegende Erfindung beschäftigt mich mit den Problemen, wie dies unter bestmöglicher Ausnutzung der zu diesem Zweck zur Verfügung stehenden Übertragungsbandbreite geschehen kann.

Fig. 4 zeigt ein Flussdiagramm einer ersten, einfachen Ausgestaltung eines erfindungsgemäßen Verfahrens zum Aktualisieren der von der Basisstation BS zum Senden an die Teilnehmerstation MSk verwendeten Gewichtungsvektoren $W_1$, $W_2$, ..., $W_m$. Das Verfahren geht aus von einem Zustand S0, in dem die Basisstation BS über einen Satz $W_1$, $W_2$, ..., $W_m$ von Gewichtungsvektoren verfügt, und an der Teilnehmerstation MSk ein Satz von sogenannten Referenz-Steuervektoren $S_1$, $S_2$, ..., $S_m$ vorliegt, die z.B. in der oben beschriebenen Weise durch eine Eigenvektoranalyse der langfristigen Kovarianzmatrix $\overline{R_{xx}}$ erhalten worden sind. Dabei wird angenommen, dass diese zwei Sätze von Vektoren im Rahmen der Genauigkeit, mit der eine Information über die gemessenen Steuervektoren von der Teilnehmerstation MSk an die Basisstation BS übertragen werden kann, übereinstimmen. Auf die Frage, wie die Basisstation BS an einen solchen Satz von Gewichtungsvektoren $W_1$, $W_2$, ..., $W_m$ gelangt, soll an späterer Stelle eingegangen werden.

Die Teilnehmerstation MSk führt periodisch eine Eigenvektoranalyse der langfristigen Kovarianzmatrix $\overline{R_{xx}}$ aus, die zu diesem Zweck z.B. durch eine gleitende Mittelwertbildung über die kurzfristigen Kovarianzmatrizen $R_{xx}$ auf einem aktuellen Stand gehalten wird. Die Periode, mit der die Eigenvektoranalyse durchgeführt wird, kann fest vorgegeben sein; sie kann aber auch in Abhängigkeit von der Änderungsgeschwindigkeit der Eigenvektoren veränderlich sein und zwischen der Teilnehmerstation MSk und der Basisstation BS vereinbart werden.

Durch eine solche Eigenvektoranalyse wird in Schritt S1 ein Satz von Eigenvektoren erhalten, die als neue Steuervektoren $S_1'$, $S_2'$, ...., $S_m'$ verwendet werden und die sich im allgemeinen von den Referenz-Steuervektoren $S_1$, $S_2$, ..., $S_m$ unterscheiden werden.

Um das Ausmaß der Änderungen der neuen Steuervektoren gegnüber den Referenz-Steuervektoren einschätzen zu können, ist es zunächst notwendig, die neu erhaltenen Steuervektoren $S_1'$, $S_2'$, ..., $S_m'$ in Schritt S2 zu ordnen oder, genauer gesagt, festzustellen, welcher der neuen Steuervektoren aus jeweils welchem der Referenz-Steuervektoren vorhergegangen ist. Es wird hier davon ausgegangen, dass die Steuervektoren jeweils so häufig neu bestimmt werden, dass der Richtungsunterschied eines neuen Steuervektors zu dem, aus dem er hervorgegangen ist, jeweils kleiner ist als zu allen anderen Steuervektoren. Das Ordnen kann daher so ablaufen, dass die neuen Steuervektoren $S_1'$, $S_2'$, ..., $S_m'$ normiert werden und unter allen möglichen Permutationen p(i) der m Steuervektoren diejenige ausgewählt wird, für die der Ausdruck

$$\sum_i \left| S_i - S_{p(i)}{}' \right|^2$$

den kleinsten Wert annimmt. Die neu erhaltenen Steuervektoren werden entsprechend dieser Permutation umgeordnet, mit der Folge, dass $S_1'$ aus $S_1$, $S_2'$, aus $S_2$ usw. hervorgegangen ist.

Anschließend wird für alle Steuervektoren die Differenz $D_i = S_i' - S_i$ ermittelt und im Schritt S4 an die Basisstation BS gesendet. Die Basisstation addiert jede empfangene vektorielle Differenz $D_i$ zu dem entsprechenden, von ihr verwendeten Gewichtungsvektor $W_i$ und verwendet von nun an die so aktualisierten Gewichtungsvektoren $W_i$, um an die Teilnehmerstation MSk zu senden. Die neu erhaltenen Steuervektoren $S_i'$ werden in Schritt S6 von der Teilnehmerstation MSk gespeichert, um bei einer Wiederholung der Schritte S1 bis S3 in der nachfolgenden Periode des Verfahrens als Referenz-Steuervektoren $S_i$ eingesetzt zu werden.

Da die Komponenten der Differenzvektoren $D_i$ zahlenmäßig deutlich kleiner als die der Steuervektoren $S_i$ bzw. $S_i'$ sein müssen, um die Möglichkeit der Zuordnung in Schritt S2 zu gewährleisten, werden zu ihrer Übertragung an die Basisstation BS deutlich weniger Bits benötigt, als wenn die Zahlenwerte der Komponenten der Vektoren $S_i'$ selber übertragen werden müssten. Da die Zahlenwerte der Differenzen im allgemeinen um so niedriger liegen werden, je kürzer die Periode ist, mit der die Schritte S1 bis S6 wiederholt werden, ist die Zahl der Bits, die für die Übertragung der Differenzen reserviert werden müssen, um so kleiner, je kürzer die Periode ist. Es ist daher möglich, die von der Basisstation BS verwendeten Gewichtungsvektoren $W_i$ häufig zu aktualisieren, ohne dass die hierfür erforderliche Bandbreite proportional zur Aktualisierungsfrequenz anwächst.

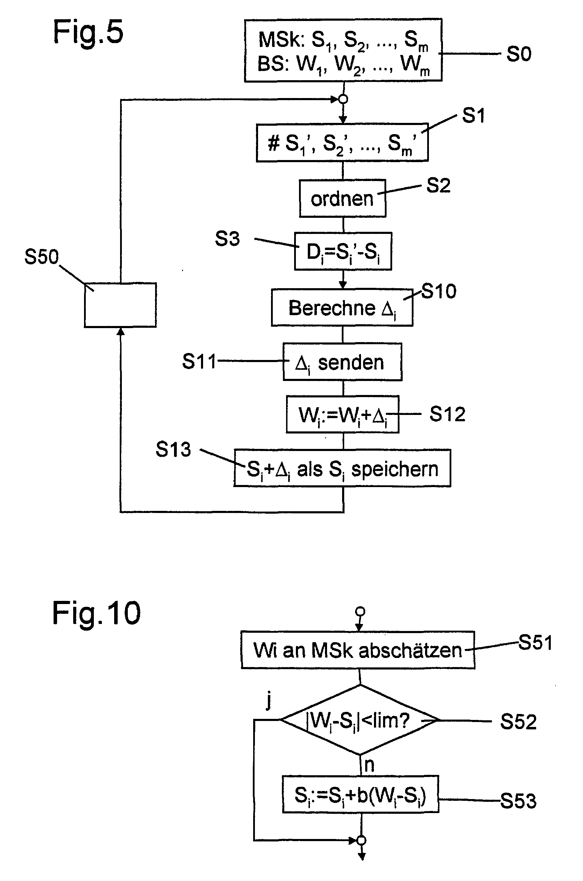

Fig. 5 zeigt eine Weiterentwicklung des Verfahrens aus Fig. 4. Die Schritte S0 bis S3 in Fig. 5 sind mit denen der Fig. 4 identisch und brauchen nicht erneut beschrieben zu werden. Ziel des Verfahrens in Fig. 5 ist, die für die Aktualisierung der Gewichtungsvektoren benötigte Uplink-Bandbreite noch weiter zu reduzieren, als dies mit dem Verfahren nach Fig. 4 möglich ist. Zu diesem Zweck folgt hier auf den Schritt S3 ein Schritt S10, in dem jeder für ein Paar von Referenz- und neuen Steuervektoren $S_i$ bzw. $S_i'$ erhaltene Differenzvektor $D_i$ durch einen diskretisierten Differenzvektor $\Delta_i$ ersetzt wird, dessen Komponenten $(\Delta_i)_j$ durch die folgende Formel definiert sind:

$$(\Delta_i)_j = \begin{cases} +1+i \ wenn \ \mathrm{Re}(D_i)_j > 0 \ und \ \mathrm{Im}(D_i)_j > 0 \\ +1-i \ wenn \ \mathrm{Re}(D_i)_j > 0 \ und \ \mathrm{Im}(D_i)_j < 0 \\ -1+i \ wenn \ \mathrm{Re}(D_i)_j < 0 \ und \ \mathrm{Im}(D_i)_j > 0 \\ -1-i \ wenn \ \mathrm{Re}(D_i)_j < 0 \ und \ \mathrm{Im}(D_i)_j < 0 \end{cases}$$

Der auf diese Weise erhaltene, grob diskretisierte Differenzvektor $\Delta_i$ wird in Schritt S11 an die Basisstation BS übertragen und dort in Schritt S12 in analoger Weise wie oben für den Schritt S5 beschrieben zum Aktualisieren der Gewichtungsvektoren $W_i$ herangezogen.

Auf diese Weise wird die für die Aktualisierung benötigte Bandbreite auf ein Mindestmaß, nämlich je ein Bit für Imaginärteil und Realteil jeder Komponente des Differenzvektors reduziert. Die Folge der Diskretisierung ist, dass eine genaue Übereinstimmung (im Rahmen der Meßgenauigkeit der Teilnehmerstation MSk) zwischen den Steuervektoren und den Gewichtungsvektoren nicht mehr hergestellt werden kann. Dies ist jedoch nicht weiter schädlich, da die Gewichtungsvektoren $W_i$ dennoch eine gute Approximation der Steuervektoren $S_i$ darstellen. Anders als im Schritt S6 wird in Schritt S13 ein Referenz-Steuervektors $S_i$ nicht durch den neuen Steuervektor $S_i'$ ersetzt, sondern durch $S_i + D_i$. Auf diese Weise ist sichergestellt, dass der Referenz-Steuervektor $S_i$, der an der Teilnehmerstation MSk für eine Wiederholung des Verfahrens gespeichert bleibt, weiterhin mit dem entsprechenden Gewichtungsvektor $W_i$ der Basisstation BS übereinstimmt. In dem Fall, dass die Korrektur des Gewichtungsvektors $W_i$ in Schritt S12 größer war als die tatsächlich gemessene Änderung, so wird diese Überkorrektur bei einer Wiederholung der Schritte S1 bis S3, S10 bis S12 in einer anschließenden Periode des Verfahrens automatisch rückgängig gemacht, mit der Folge, dass wenn sich eine Komponente eines Steuervektors $S_i$ im Laufe mehrerer Wiederholungen dieser Schritte nicht ändert, der entsprechende Wert des Gewichtungsvektors $W_i$ um den Wert des Steuervektors $S_i$ oszilliert.

Falls die Änderung des Referenz-Steuervektors $S_i$ in Schritt S13 nicht groß genug war, um einer festgestellten Änderung des neuen Steuervektors $S_i'$ Rechnung zu tragen, so findet in der anschließenden Periode des Verfahrens eine zweite Korrektur des entsprechenden Wertes in die gleiche Richtung statt.

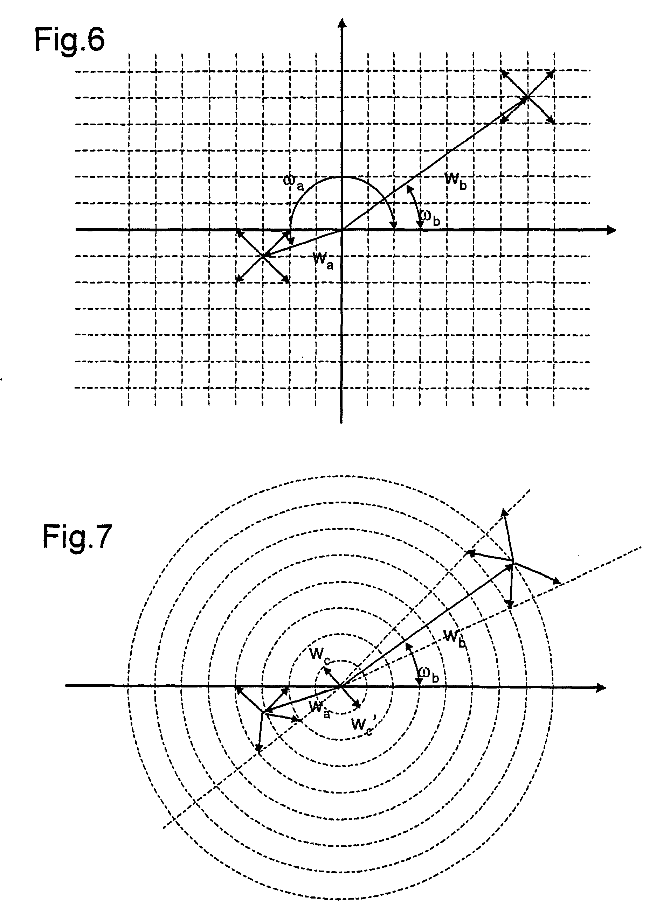

Fig. 6 zeigt in der komplexen Zahlenebene zwei Werte $W_a$, $W_b$ einer Komponente eines Gewichtungsvektors und die Werte, die diese Komponenten jeweils nach Durchführung des Schrittes S12 der Fig. 5 annehmen können. Man erkennt, dass im Falle der Komponente $w_a$, die einen kleineren Betrag als $w_b$ hat, der Phasenwinkel $\omega_a$ durch die Änderung des Schritts S12 wesentlich stärker verändert werden kann als der Phasenwinkel $\omega_b$. Um diesen Effekt zu vermeiden, kann anstelle der oben angenommenen kartesischen Darstellung der komplexen Komponenten eine polare Darstellung verwendet werden. In einem solchen Fall kann der diskretisierte Differenzvektor $D_i$ wie folgt definiert werden:

$$(\Delta_i)_j = \begin{cases} (+1,+1) \; wenn \; |(S_i')_j| > |(S_i)_j| \; und \; Phase((S_i')_j) > Phase((S_i)_j) \\ (+1,-1) \; wenn \; |(S_i')_j| > |(S_i)_j| \; und \; Phase((S_i')_j) < Phase((S_i)_j) \\ (-1,+1) \; wenn \; |(S_i')_j| < |(S_i)_j| \; und \; Phase((S_i')_j) > Phase((S_i)_j) \\ (-1,-1) \; wenn \; |(S_i')_j| < |(S_i)_j| \; und \; Phase((S_i')_j) < Phase((S_i)_j) \end{cases}$$

Dies bedeutet: wenn das erste Bit des Bitpaars $(D_i)_j$ den Wert 1 bzw. -1 hat, muss der Betrag des entsprechenden Gewichtungsvektors um eine Einheit heraufgesetzt bzw. herabgesetzt werden, und wenn das zweite Bit den Wert 1 bzw. -1 hat, muss der Phasenwinkel um eine Schrittweite herauf- bzw. herabgesetzt werden, die willkürlich festgelegt werden kann. Fig. 7 zeigt die Werte in der komplexen Zahlenebene, die die Komponente $w_a$, bzw. $w_b$ bei dieser Variante vor und nach Durchführung des Anpassungsschritts S12 annehmen kann. Die Zahl der Schritte, die zur Herbeiführung einer gegebenen Phasendrehung der Komponente benötigt werden, ist bei dieser Variante unabhängig vom Betrag der Komponente dieselbe und nur von der Schrittweite abhängig.

Bei dieser Variante ist es auch möglich, negative Beträge der Komponenten zuzulassen. Dadurch ergibt sich z.B. die Möglichkeit, die Phase einer Komponente $W_c$ vom Betrag 1 unabhängig von der festgelegten Schrittweite des Phasenwinkels im Rahmen von zwei Perioden des Verfahrens um 180° umzukehren, indem bei einer ersten Durchführung des Aktualisierungsschritts S12 der Betrag auf 0 und bei einer zweiten Durchführung im Laufe einer darauffolgenden Periode der Betrag auf -1 gesetzt wird, um so die in der Fig. als $w_c'$ bezeichnete Komponente zu erhalten.

Des weiteren kann eine Phasendrehung um 180° auch in nur einem Schritt vollzogen werden, wenn man die Diskretisierung so wählt, dass der Amplitudenwert 0 nicht enthalten ist, wenn also z.B. ein Schritt von +0,5 auf -0,5 führt.

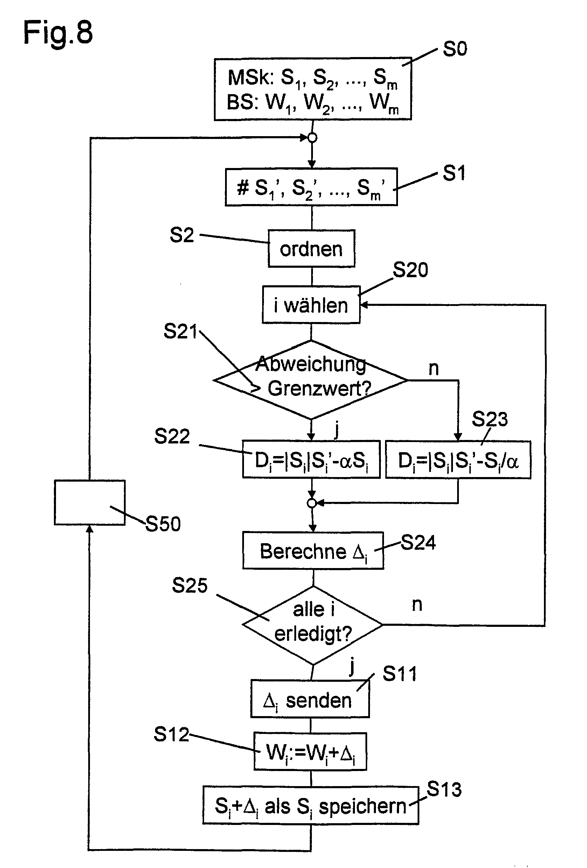

Fig. 8 zeigt eine bevorzugte Weiterentwicklung des Verfahrens aus Fig. 5. Die Schritte S0 bis S2 sind hier wiederum die gleichen wie in den Figuren 4 und 5. Es wird hier angenommen, dass die neuen Steuervektoren $S_1'$, $S_2'$, ..., $S_m'$ bei der Eigenvektoranalyse jeweils mit einem Einheitsbetrag erhalten werden, wohingegen die Beträge der Referenz-Steuervektoren $S_1$, ..., $S_m$ von 1 abweichen können. Nachdem die neuen Steuervektoren in Schritt S2 den Referenz-Steuervektoren $S_1$, ..., $S_m$ zugeordnet worden sind, wird in Schritt S20 ein Index i willkürlich ausgewählt, um anschließend in Schritt S21 zu überprüfen, ob die Richtungsabweichung zwischen neuem Steuervektor $S_i'$ und Referenz-Steuervektor $S_i$ einen Grenzwert überschreitet. Eine solche Überschreitung kann beispielsweise festgestellt werden, wenn das Skalarprodukt der zwei Vektoren um einen vorgegebenen Anteil, z.B. 1%, kleiner als der Betrag des alten Steuervektors ist.

Wenn die Überschreitung festgestellt wird, d.h. wenn die Richtungsänderung der Steuervektoren stark ist, verzweigt das Verfahren zu Schritt S22, in dem ein Differenzvektor $D_i$ nach folgender Formel berechnet wird:

$$D_i = |S_i|S_i' - \alpha S_i$$

wobei $\alpha$ eine reelle Konstante und größer als 1 ist. Der erste Term auf der rechten Seite dieser Formel ist ein zum neuen Steuervektor $S_i'$ paralleler Vektor mit dem Betrag des Referenz-Steuervektors $S_i$, der zweite Term ist ein zum Referenz-Steuervektor $S_i$ paralleler Vektor mit einem um den Faktor $\alpha$ verminderten Betrag. Die Differenz $D_i$ ist daher ein zu $S_i$ und $S_i'$ im wesentlichen antiparalleler Vektor.

Wenn der Grenzwert nicht überschritten wird, die Richtungsänderung also langsam ist, wird der Differenzvektor $D_i$ nach folgender Formel berechnet:

$$D_i = |S_i|S_i' - \frac{1}{\alpha}S_i \;,$$

wobei $\alpha$ den gleichen Wert wie oben hat. Der Differenzvektor $D_i$ ist in diesem Fall zu $S_i$ und $S_i'$ im wesentlichen parallel.

Der so erhaltene Differenzvektor $D_i$ wird anschließend in Schritt S24 in der gleichen Weise wie von Schritt S10 der Fig. 5 bekannt zum diskretisierten Differenzvektor $\Delta_i$ umgeformt. Die genaue Richtung dieses diskretisierten Differenzvektors $\Delta_i$ ist zwar eine andere als die des Differenzvektors $D_i$, die grobe Orientierung parallel oder antiparallel zu $S_i$ und $S_i'$ bleibt jedoch erhalten.

In Schritt S25 wird geprüft, ob noch unverarbeitete Indizes i übrig sind, und wenn ja, kehrt das Verfahren zu Schritt S20 zurück, wählt einen neuen Index und verarbeitet diesen in der oben angegebenen Weise.

Nachdem so alle diskretisierten Differenzvektoren $\Delta_i$ erhalten worden sind, werden sie, wie bereits mit Bezug auf Fig. 5 angegeben, in Schritt S11 an die Basisstation BS gesendet und dort in Schritt S12 zu den Gewichtungsvektoren $W_i$ hinzuaddiert. Außerdem wird in Schritt S13 die Summe $S_i + \Delta_i$ gespeichert, um von der Teilnehmerstation MSk in einer nachfolgenden Periode des Verfahrens als Referenz-Steuervektor $S_i$ verwendet zu werden.

Wenn sich bei diesem Verfahren die Richtung eines Steuervektors nur langsam ändert, so führt dies dazu, dass der Betrag des Referenz-Steuervektors und des entsprechenden Gewichtungsvektors, dessen Entwicklung der Referenz-Steuervektor widerspiegelt, wegen der parallelen Orientierung der hinzuaddierten diskretisierten Differenzvektoren von Periode zu Periode anwächst, was eine zunehmend feinfühligere Steuerung der Richtung des Gewichtungsvektors an der Basisstation BS ermöglicht. Der Betrag eines Steuervektors mit schnell veränderlicher Richtung hingegen nimmt im Laufe der Zeit ab, mit der Folge, dass die Richtung dieses Steuervektors bzw. des ihm entsprechenden Gewichtungsvektors an der Basisstation im Laufe nur weniger Perioden stark verändert werden kann. Auf diese Weise ergibt sich ohne jeglichen zusätzlichen Signalisierungsaufwand eine automatische Anpassung der Feinheit der Richtungssteuerung an die Richtungsveränderlichkeit der Steuervektoren.

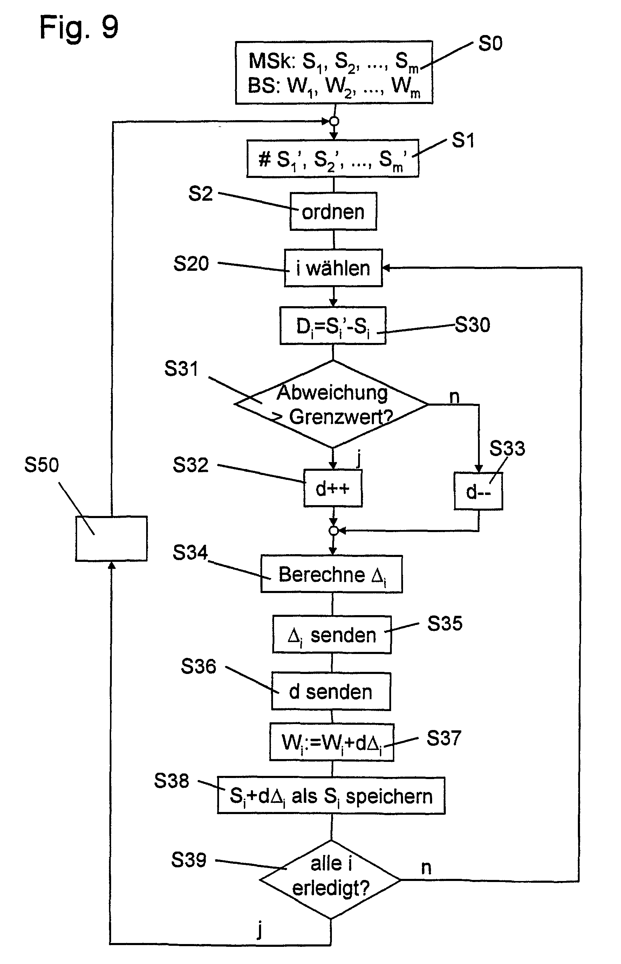

Der gleiche Vorteil läßt sich auf anderen Wegen mit dem in Fig. 9 dargestellten Verfahren erreichen. Die Schritte S0, S1, S2, S20 dieses Verfahrens sind die gleichen wie bereits mit Bezug auf Fig. 8 beschrieben. Anders als bei der Ausgestaltung der Fig. 8 wird allerdings hier angenommen, dass die Referenz-Steuervektoren $S_i$ genauso wie die neuen Steuervektoren $S_i'$ auf 1 normiert sind. Der im Anschluß an Schritt S20 in Schritt 30 berechnete Differenzvektor $D_i = S_i'-S_i$ ist daher ein direktes Maß für die Änderung der Richtung des i-ten Steuervektors.

In Schritt S31 wird überprüft, ob die Richtungsänderung einen Grenzwert überschreitet. Wenn ja, d.h. wenn die Richtung des Steuervektors schnell veränderlich ist, wird in Schritt S32 eine Schrittweite d heraufgesetzt; anderenfalls verzweigt das Verfahren zu Schritt S33, wo die Schrittweite d herabgesetzt wird.

Das Heraufsetzen der Schrittweite d in Schritt S32 kann z.B. durch Multiplizieren der Schrittweite d mit einem vorgegebenen Faktor $\alpha$, der größer als 1 ist, oder durch Setzen auf einen fest vorgegebenen Anfangswert erfolgen, wohingegen das Herabsetzen der Schrittweite in Schritt S33 durch Dividieren der Schrittweite d durch einen festen Wert, der größer als 1 ist, erfolgen kann. Da die Multiplikation mit d oder die Division mit d in aufeinanderfolgenden Perioden des Verfahrens wiederholt erfolgen kann, ist die Schrittweite in weiten Grenzen variabel.

Die an die Festlegung der Schrittweite d anschließende Bestimmung des diskretisierten Differenzvektors $\Delta_i$ in Schritt S34 ist die gleiche wie in Schritt S24 von Fig. 8. Der diskretisierte Differenzvektor $\Delta_i$ und die Schrittweite d werden in den Schritten S35, S36 an die Basisstation BS übertragen, und der dem Steuervektor $S_i$ entsprechende Gewichtungsvektor $W_i$ wird nach der Formel $W_i:=W_i+d\Delta_i$ aktualisiert. Bei dieser Verfahrensvariante ist also die aus einem gegebenen diskretisierten Differenzvektor $\Delta_i$ resultierende Änderung des Gewichtungsvektors $W_i$ um so größer, je stärker die Änderung der Richtung des entsprechenden Steuervektors $S_i$ ist, während sie immer weiter abnimmt, je länger die Richtung des Steuervektors sich nur geringfügig verändert. Auch auf diese Weise kann eine an unterschiedliches Änderungsverhalten gut angepasste Aktualisierung der Gewichtungsvektoren erreicht werden.

Die Übertragung der Schrittweite kann hierbei auch für alle Komponenten eines Steuervektors, bzw. für den Fall, dass mehrere Steuervektoren übertragen werden sollen, z.B. die ausgewählten Eigenvektoren, für mehrere Steuervektoren gemeinsam durchgeführt werden. Es ist zu erwarten, dass die Änderungsgeschwindigkeit aller Eigenvektoren gleich oder zumindest ähnlich ist, da sie im wesentlichen von der Geschwindigkeit abhängt, mit der sich die Ausbreitungsbedingungen ändern. Auf diese Weise beansprucht die Übertragung der Schrittweite kaum Bandbreite.

In Schritt S38 wird der alte Gewichtungsvektor $S_i$ durch $S_i+d\Delta_i$ ersetzt. Der alte Steuervektor $S_i$ ändert sich somit im Gleichschritt mit dem Gewichtungsvektor $W_i$.

Wenn in dem nachfolgenden Schritt S39 festgestellt wird, dass noch nicht alle Indizes i abgearbeitet sind, wiederholt das Verfahren die Schritte ab Schritt S20 für einen weiteren Index i. Andernfalls ist die Aktualisierung abgeschlossen, und nach einer vorgegebenen Zeitspanne beginnt die Teilnehmerstation MSk von neuem, das Verfahren ab Schritt S1 abzuarbeiten.

Bei den oben mit Bezug auf die Figuren 4, 5, 8, 9 beschriebenen Verfahren kann das Problem auftreten, dass infolge eines Fehlers bei der Übertragung des Differenzvektors $D_i$ oder $\Delta_i$ an die Basisstation BS sich eine Abweichung zwischen den Werten der Gewichtungsvektoren $W_i$ und denen der Referenz-Steuervektoren $S_i$ einschleicht, die bei ordnungsgemäßem Funktionieren der Übertragung mit den Gewichtungsvektoren identisch sein sollten. Zur Behebung dieses Problems gibt es mehrere Möglichkeiten.

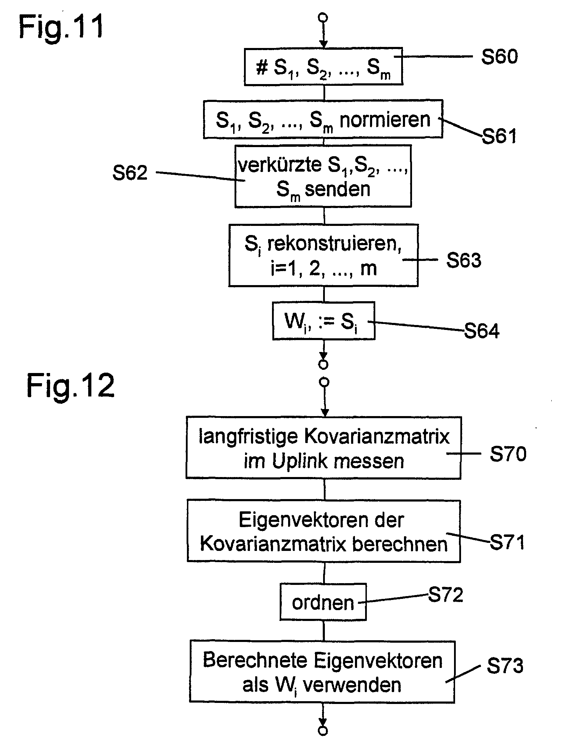

Eine erste ist in dem Flussdiagramm der Fig. 10 dargestellt, dessen Schritte an der mit S50 bezeichneten Stelle in die Verfahren der Figuren 4, 5, 7, 9 eingefügt werden können. Der erste dieser Schritte ist die Abschätzung der von der Basisstation verwendeten Gewichtungsvektoren $W_i$ durch die Teilnehmerstation MSk (S51). Eine solche Abschätzung ist anhand von sogenannten Dedicated Pilot Bits möglich, die spezifisch für jedes Antennenelement $AE_1$, ..., $AE_M$ von der Basisstation BS ausgesendet werden und die von der Teilnehmerstation MSk mit einer aus den gemeinsamen Pilot Bits erhaltenen Kanalschätzung verglichen werden.

Die Abschätzung durch die Teilnehmerstation MSk ist mit einer gewissen Unsicherheit verbunden. Deswegen sollte eine Abweichung zwischen den von der Teilnehmerstation MSk abgeschätzten Gewichtungsvektoren und den alten Steuervektoren $S_i$ nur dann Anlaß geben, einen Übertragungsfehler zu vermuten, wenn sie einen Grenzwert lim überschreitet. Die Teilnehmerstation MSk überprüft daher in Schritt S52, ob eine solche Grenzwertüberschreitung vorliegt. Wenn nicht, wird angenommen, dass der von der Basisstation BS verwendete Gewichtungsvektor $W_i$ korrekt ist, und es geschieht weiter nichts. Wenn hingegen festgestellt wird, dass eine Abweichung vorliegt, so wird in Schritt S53 der Referenz-Gewichtungsvektor $S_i$ nach der Formel $S_i := S_i + b(W_i - S_i)$ angepasst. Dabei ist b eine Konstante, deren Wert größer als 0 und $\leq 1$ ist. Ein Wert b=1 entspricht der vollständigen Ersetzung des alten Steuervektors $S_i$ durch den abgeschätzten Gewichtungsvektor $W_i$. Eine solche Vorgehensweise ist nur zweckmäßig, wenn die Abschätzung mit ausreichender Genauigkeit möglich ist. Wenn die Abschätzung mit Unsicherheiten behaftet ist, wird man zweckmäßigerweise einen Wert von b zwischen 0 und 1 wählen, so dass der Referenz-Steuervektor $S_i$ nach der Korrektur des Schritts S53 zwischen seinem Wert vor der Korrektur und dem des abgeschätzten Gewichtungsvektors $W_i$ liegt.

Eine weitere Möglichkeit, Fehler bei der Übertragung des Differenzvektors bei den Verfahren der Figuren 4, 5, 8, 9 im Laufe der Zeit zu kompensieren ist, den Referenz-Steuervektor $S_i$ wie auch den Gewichtungsvektor $W_i$ in Schritt S50 mit einem nahe bei 1 aber kleiner als 1 gewählten Vergessensfaktor zu multiplizieren. Eine solche Multiplikation ändert die Richtung der beiden Vektoren nicht, sie führt aber dazu, dass eine Diskrepanz zwischen den Steuervektoren und den Gewichtungsvektoren, die sich durch einen Übertragungsfehler ergeben hat, mit jeder Wiederholung des Schritts S50 um den Vergessensfaktor reduziert wird, so dass Basisstation und Teilnehmerstation im Laufe der Zeit ohne einen steuernden Eingriff von außen, allein durch die fortlaufende Aktualisierung des Gewichtungsvektors durch Übertragen und Hinzuaddieren des Differenzvektors, zur Übereinstimmung der Vektoren zurückfinden.

Die Verkürzung der Steuervektoren in Schritt S50 hebt die Wirkung einer Verlängerung durch Hinzuaddieren eines nach außen gerichteten diskretisierten Differenzvektors $D_i$ in Schritt S13 teilweise auf. Daher kann bei dieser Variante des Verfahrens der Betrag von $S_i$ nicht beliebig groß werden, und die Steuerung der Richtung von $S_i$ kann nicht beliebig fein werden, wenn der Vergessensfaktor eine feste Konstante ist. Um eine solche Beschränkung zu vermeiden, kann es zweckmäßig sein, anstelle eines konstanten Vergessensfaktors einen Vergessensfaktor anzuwenden, der eine Funktion des Betrags der Steuervektoren ist. Der Vergessensfaktor kann z.B. für alle Steuervektoren einheitlich als Funktion des Betrages des längsten Steuervektors oder als eine Funktion der Summe der Beträge der Steuervektoren definiert werden, wobei die Funktion mit steigendem Argument von unten gegen 1 konvergiert. Denkbar ist auch, für jeden der Steuervektoren jeweils in Abhängigkeit von dessen Betrag $S_i$ einen eigenen Vergessensfaktor zu definieren.

Eine zweite Ausgestaltung des erfindungsgemäßen Verfahrens ist in Fig. 11 gezeigt. Bei dieser Ausgestaltung werden keine für die Änderung der Steuervektoren repräsentativen Differenzvektoren von der Teilnehmerstation zur Basisstation übertragen, so dass einmalige Übertragungsfehler nicht zu länger anhaltenden Abweichungen zwischen Steuervektoren und Gewichtungsvektoren führen können. Bei diesem Verfahren ermittelt zunächst die Teilnehmerstation MSk in der oben beschriebenen Art und Weise einen Satz von Steuervektoren $S_1$, $S_2$, $S_m$ aus einer langfristigen Kovarianzmatrix $\overline{R_{xx}}$. Die so erhaltenen Eigenvektoren von unbestimmtem Betrag werden in Schritt S61 normiert. Ein mögliches Normierungsverfahren ist das Normieren jedes Steuervektors auf den Betrag 1. Dadurch ist es möglich, bei der Übertragung der Steuervektoren an die Basisstation BS in Schritt S62 von 2M Zahlenwerten, die benötigt werden, um die M komplexwertigen Komponenten eines solchen Vektors, deren Zahl in der Zahl M der Antennenelemente der Basisstation entspricht, vollständig zu übertragen, jeweils einen fortzulassen. Dieser Zahlenwert kann in Schritt S63 an der Basisstation in Kenntnis der Normierungsvorschrift rekonstruiert werden. Die rekonstruierten Vektoren werden in Schritt S64 zur Verwendung als Gewichtungsvektoren $W_i$ in der Basisstation BS gespeichert.

Die Einsparung der Übertragung eines Zahlenwerts kann mit jeder beliebigen Normierungsvorschrift erreicht werden. Eine besonders vorteilhafte Möglichkeit ist, die Normierung der Steuervektoren $S_i$ jeweils so durchzuführen, dass eine fest vorgegebene Komponente, z.B. der Realteil der ersten Komponente, den Wert 1 annimmt. Dieser Wert braucht dann nicht übertragen zu werden, und er kann an der Basisstation einfach wieder hinzugefügt werden, ohne das hierfür irgendwelche Rechenschritte erforderlich sind.

Selbstverständlich kann anstelle einer kartesischen Darstellung, mit Real- und Imaginärteil, auch eine polare Darstellung der Vektorkomponenten, mit Betrag und Phase, gewählt werden. In diesem Fall kann bei der Übertragung eines Steuervektors an die Basisstation BS der Betrag einer Komponente fortgelassen werden.

Die Übertragung eines zweiten Zahlenwerts kann bei einer Weiterentwicklung dieser zweiten Ausgestaltung dadurch überflüssig gemacht werden, dass die Phasen aller Komponenten eines Steuervektors normiert werden. Als Normierungsvorschrift kann z.B. angenommen werden, dass die erste Komponente jedes Steuervektors positiv und reell sein soll. Zu diesem Zweck werden alle Komponenten eines Steuervektors um die vorzeichenvertauschte Phase seiner ersten Komponente gedreht. In diesem Fall braucht auch der Imaginärteil oder, bei Verwendung einer polaren Darstellung, die Phase der ersten Komponente nicht an die Basisstation übertragen zu werden, da er bzw. sie dort als 0 angenommen werden kann.

Mit diesem Verfahren ist eine laufende Aktualisierung der von der Basisstation BS zum Senden an die Teilnehmerstation MSk verwendeten Gewichtungsvektoren möglich. Insbesondere ist dieses Verfahren dazu geeignet, der Basisstation BS den im Schritt S0 der Verfahren der Figuren 4, 5, 8, 9 als bekannt vorausgesetzten Satz von Gewichtungsvektoren $W_i$,..., $W_m$ zu liefern.

Wenn das Verfahren der Fig. 11 zum fortlaufenden Aktualisieren der Gewichtungsvektoren der Basisstation eingesetzt wird, so kann ein Fehler bei der Übertragung eines hochsignifikanten Bits dazu führen, dass eine Komponente eines Gewichtungsvektors grob fehlerhaft ist, was zu einer für die Teilnehmerstation MSk schlecht angepassten Strahlformung führen kann. Um derartige Fehler zu vermeiden, ist bei einer weiterentwickelten Variante des Verfahrens vorgesehen, dass die Basisstation BS eine Plausibilitätskontrolle der empfangenen Steuervektoren durchführt und einen Steuervektor nur dann als Gewichtungsvektor verwendet, wenn die Plausibilitätskontrolle ein befriedigendes Ergebnis liefert. Eine solche Plausibilitätskontrolle kann z.B. darin bestehen, dass in aufeinanderfolgenden Perioden des Verfahrens (wobei in jeder Periode einmal Steuervektoren an die Basisstation übertragen werden) die Steuervektoren aufgezeichnet werden und ein neuer Steuervektor als nicht plausibel angesehen wird, wenn seine Abweichung von seinem Vorgänger die Differenz zwischen diesem Vorgänger und dessen Vorgänger um mehr als einen vorgegebenen Faktor überschreitet. In einem solchen Fall kann z.B. vorgesehen werden, dass der Vorgänger des neu übertragenen Vektors unverändert als Gewichtungsvektor weiterverwendet wird, oder dass der Gewichtungsvektor durch eine - eventuell gewichtete - Mittelung aus dem neuen Steuervektor und dessen Vorgänger berechnet wird.

Eine andere Möglichkeit, Übertragungsfehler zu bekämpfen ist natürlich die redundante oder codierte Übertragung der Steuervektoren. Eine solche Vorgehensweise erfordert allerdings die Übertragung einer größeren Datenmenge von der Teilnehmerstation MSk zur Basisstation BS als im oben beschriebenen Fall einer einfachen Plausibilitätskontrolle. Es gibt jedoch eine vorteilhafte Variante, die mit einem minimalen Mehraufwand an Übertragungsbandbreite einen wirksamen Schutz vor groben Fehlern bei der Aktualisierung der Gewichtungsvektoren erreicht. Bei dieser Variante wird bei jedem zu übertragenden Zahlenwert eines Steuervektors das signifikanteste Bit doppelt übertragen.

Wenn beide Versionen des Bits von der Basisstation identisch empfangen werden, kann davon ausgegangen werden, dass diese korrekt sind, und eventuelle Fehler bei der Übertragung weniger signifikanter Bits können nicht zu allzu schwerwiegenden Fehlern bei der Strahlformung durch die Gewichtungsvektoren führen.

Falls die zwei signifikantesten Bits von der Basisstation ungleich empfangen werden, so muss natürlich eines dieser beiden Bits fehlerhaft sein. Welcher Wert der richtige ist, läßt sich anhand der Übertragung nicht feststellen. Diese Entscheidung kann allerdings anhand einer Plausibilitätskontrolle getroffen werden, indem z.B. derjenige Wert des signifikantesten Bits als der richtige angenommen wird, der die geringste Differenz zu dem in der vorhergehenden Periode empfangenen entsprechenden Zahlenwert aufweist, oder indem anhand von sich über eine Mehrzahl von Steuervektoren früherer Perioden erstreckender Aufzeichnungen eine Änderungstendenz des betreffenden Zahlenwerts ermittelt wird, und derjenige Wert des signifikantesten Bits ausgewählt wird, der die geringste Abweichung zu einer Extrapolation der beobachteten Änderungstendenz ergibt.

Fig. 12 zeigt eine alternative Möglichkeit zur Initialisierung der Gewichtungsvektoren $W_1$, $W_2$, ..., $W_m$ der Basisstation BS. Im Gegensatz zu dem bislang behandelten Verfahren werden hier keine Steuervektoren von der Teilnehmerstation MSk an die Basisstation BS übertragen, um dort als Gewichtungsvektoren verwendet zu werden, statt dessen führt die Basisstation BS in Schritt S70 selbst eine Messung der langfristigen Kovarianzmatrix $\overline{R_{xx}}$ des von der Teilnehmerstation MSk empfangenen Uplink-Signals durch. In Schritt S71 führt sie in der gleichen Weise wie oben für die Teilnehmerstation MSk beschriebene eine Eigenvektoranalyse dieser Kovarianzmatrix durch. In Schritt S72 werden diese Eigenvektoren nach einem vorgegebenen Schema, z.B. anhand der Beträge ihrer Eigenwerte, geordnet. Eine gleiche Ordnung führt die Teilnehmerstation MSk bei dem von ihr bestimmten Vektoren durch. Da die Übertragungskanäle in Uplink- und Downlink-Richtung im langfristigen Mittel zwar nicht völlig, aber doch weitgehend reziprok sind, kann angenommen werden, dass auf diese Weise an der Basisstation und der Teilnehmerstation jeweils Sätze von Gewichtungsvektoren bzw. Steuervektoren mit weitgehend übereinstimmender Reihenfolge und zumindest approximativer Übereinstimmung der Komponenten erhalten werden.

Nach dieser Initialisierung eventuell bestehende Abweichungen zwischen den Steuervektoren $S_1$, ..., $S_m$ der Teilnehmerstation MSk und den Gewichtungsvektoren $W_1$, .... , $W_m$ der Basisstation BS heben sich im Laufe der Zeit genauso wie durch Übertragungsfehler bedingte Abweichungen auf, wenn ein Übertragungsfehler kompensierendes Verfahren vom oben beschriebenen Typ eingesetzt wird, das in Schritt S50 die Verarbeitungsschritte der Fig. 10 oder die Multiplikation mit dem Vergessensfaktor durchführt.

Wegen dieser selbständigen Fehlerkorrektur können statt einer expliziten Initialisierung auch feste Initial-Steuervektoren verwendet werden. Zweckmäßigerweise wählt man deren Betrag recht klein, so dass mit wenigen Schritten große Phasenänderungen realisiert werden können.

Eine weitere, nicht in einer Figur dargestellte Möglichkeit, die Gewichtungsvektoren $W_1$, $W_2$, ..., $W_m$ der Basisstation zu initialisieren ist, von einem Satz von von der Teilnehmerstation MSk gemessenen Steuervektoren $S_1$, $S_2$, ..., $S_m$ jeweils nur eine begrenzte Zahl von hochsignifikanten Bits zu übertragen. So kann z.B. vorgesehen werden, dass, auch wenn die Teilnehmerstation in der Lage ist, die Steuervektoren mit einer Genauigkeit von 8 Bit zu berechnen, nur die ein oder zwei signifikantesten Bits jedes Zahlenwerts eines solchen Steuervektors an die Basisstation übertragen werden, so dass diese zunächst mit Gewichtungsvektoren zu senden beginnt, die nur eine grobe Näherung der Steuervektoren darstellen. Auch hier kann durch die Fehlerkompensation des Schritts S50 im Laufe der Zeit eine genauere Angleichung eines Gewichtungsvektors an den jeweils entsprechenden Steuervektor erreicht werden, sofern letzterer sich langsam genug ändert.

Dieses Verfahren kann auch nicht nur während der Initialisierung angewandt werden, sondern während der gesamten Zeit. Gegebenenfalls können trotzdem die Gewichtungsvektoren in grober Quantisierung übertragen werden, nicht um ihre exakten Werte zu übertragen, sondern um sicherzustellen, dass Basisstation und Mobilstation Steuer- bzw.- Gewichtungsvektoren in der gleichen Reihenfolge ordnen, so dass eine von der Teilnehmerstation gemeldete Änderung eines n-ten Steuervektors an der Basisstation auf den richtigen Gewichtungsvektor angewendet wird. Es ist zwar möglich, die Eigenvektoren anhand ihrer Eigenwerte an Teilnehmerstation und Basisstation weitgehend gleich zu sortieren, es kann aber zu Diskrepanzen kommen, wenn zwei Eigenvektoren gleiche Eigenwerte haben. Um solche Eigenvektoren unterscheiden zu können, reicht eine grobe Übertragung aus, die im Extremfall nur die Vorzeichen der Komponenten enthält.

**Patentansprüche**

1. Verfahren zur Übertragung von Rückkopplungsinformation für die Strahlformung in einem Funk-Kommunikationssystem mit Teilnehmerstationen (MSk, MS1, MS2,...) und einer Basisstation (BS), die eine Antenneneinrichtung (AE) mit mehreren Antennenelementen ($AE_1$ bis $AE_M$) aufweist, die ein Downlinksignal jeweils gewichtet mit Koeffizienten ($(W_i)_j$, j=1, ..., M) eines aktuellen Gewichtungsvektors ($W_i$) an eine Teilnehmerstation (MSk) abstrahlen, wobei der aktuelle Gewichtungsvektor ($W_i$) anhand der Rückkopplungsinformation von der Teilnehmerstation (MSk) aktualisiert wird, **gekennzeichnet durch** die Schritte

    a) Abschätzen (S1) der Richtung eines Steuervektors ($S_i$') in einem M-dimensionalen Vektorraum **durch** die Teilnehmerstation (MSk) anhand von Messungen des Downlinksignals;
    b) Ermitteln (S3; S22, S23, S24; S30-S34) einer Änderung ($D_i$, $\Delta_i$) der in Schritt a) (S1) abgeschätzten Richtung mit der Richtung eines Referenz-Steuervektors ($S_i$);
    c) Übertragen (S4; S11; S35) einer für die Änderung repräsentativen Information als Rückkopplungsinformation an die Basisstation und
    d) Anpassen (S5; S12; S37) des Gewichtungsvektors ($W_i$) anhand der repräsentativen Information.

2. Verfahren nach Anspruch 1, **dadurch gekennzeichnet, dass** Steuervektor ($S_i$) und Gewichtungsvektor ($W_i$) parallele Vektoren sind.

3. Verfahren nach Anspruch 2, **dadurch gekennzeichnet, dass** die für die Änderung repräsentative Information eine vektorielle Differenz ($D_i$, $\Delta_i$) zwischen einem sogenannten neuen Steuervektor ($S_i$'), der die abgeschätzte Richtung hat, und dem Referenz-Steuervektor ($S_i$) ist.

4. Verfahren nach Anspruch 3, **dadurch gekennzeichnet, dass** die Komponenten der vektoriellen Differenz ($\Delta_i$) auf zwei Werte beschränkt sind, die jeweils einer positiven bzw. negativen Differenz zwischen den entsprechenden Komponenten des Referenz-Steuervektors und des neuen Steuervektors entsprechen.

5. Verfahren nach einem der vorhergehenden Ansprüche, **dadurch gekennzeichnet, dass** dem Steuervektor ($S_i$) ein Betrag zugeordnet wird, der um so kleiner festgelegt wird, je schneller sich die Richtung des Steuervektors ändert.

6. Verfahren nach einem der Ansprüche 1 bis 4, **dadurch gekennzeichnet, dass** das Ausmaß der Anpassung des Gewichtungsvektors um so größer festgelegt wird, je schneller sich die Richtung des Steuervektors ändert.

7. Verfahren nach Anspruch 6 und Anspruch 3 oder 4, **dadurch gekennzeichnet, dass** eine Schrittweite (d) berechnet wird (S31-S33), und dass die Anpassung des Gewichtungsvektors durch Hinzuaddieren der vektoriellen Differenz ($D_i$, $\Delta_i$), multipliziert mit der Schrittweite, erfolgt (S37).

8.  Verfahren nach einem der vorhergehenden Ansprüche, **dadurch gekennzeichnet, dass** die Schritte a bis d periodisch wiederholt werden.

9.  Verfahren nach Anspruch 8, **dadurch gekennzeichnet, dass** ein in Schritt a erhaltener Steuervektor ($S_i$') zum Referenz-Steuervektor ($S_i$) für eine nachfolgende Periode des Verfahrens gemacht wird (S6).

10. Verfahren nach Anspruch 8, **dadurch gekennzeichnet, dass** der Referenz-Steuervektor ($S_i$) ein an der Teilnehmerstation (MSk) gespiegeltes Abbild des Gewichtungsvektors ($W_i$) ist, und dass der Referenz-Steuervektor ($S_i$) anhand der repräsentativen Information in der gleichen Weise wie der Gewichtungsvektor ($W_i$) angepasst wird (S13, S38).

11. Verfahren nach Anspruch 10, **dadurch gekennzeichnet, dass** die Teilnehmerstation (MSk) eine Abschätzung des von der Basisstation (BS) verwendeten Gewichtungsvektors ($W_i$) durchführt (S51) und im Falle einer Abweichung zwischen dem Gewichtungsvektor ($W_i$) und dem Referenz-Steuervektor ($S_i$) letzteren anpasst (S53).

12. Verfahren nach einem der Ansprüche 8 bis 11, **dadurch gekennzeichnet, dass** der Steuervektor ($S_i$) und der Gewichtungsvektor ($W_i$) periodisch mit einem Vergessensfaktor multipliziert werden (S50), wobei der Vergessensfaktor eine reelle Zahl zwischen 0 und 1 und vorzugsweise nahe bei 1 ist.

13. Verfahren nach Anspruch 12, **dadurch gekennzeichnet, dass** der Vergessensfaktor eine Konstante ist.

14. Verfahren nach Anspruch 12, **dadurch gekennzeichnet, dass** der Vergessensfaktor eine Funktion des Betrages wenigstens eines Steuervektors ($S_i$) ist.

15. Verfahren nach einem der vorhergehenden Ansprüche, **dadurch gekennzeichnet, dass** die Komponenten der Steuervektoren und Gewichtungsvektoren komplexwertig sind.

16. Verfahren nach Anspruch 15, **dadurch gekennzeichnet, dass** die Komponenten der Steuervektoren und Gewichtungsvektoren aus Betrag und Phase bestehen.

17. Verfahren nach einem der vorhergehenden Ansprüche, **dadurch gekennzeichnet, dass** zu seiner Initialisierung die Komponenten von von der Teilnehmerstation (MSk) abgeschätzten Steuervektoren ($S_i$) an die Basisstation (BS) zur Verwendung als Gewichtungsvektoren ($W_i$) übertragen werden (S62).

18. Verfahren nach Anspruch 17, **dadurch gekennzeichnet, dass** bei der Initialisierung die Komponenten der Steuervektoren mit einer geringeren Genauigkeit übertragen werden als sie von der Teilnehmerstation abgeschätzt werden.

19. Verfahren nach einem der Ansprüche 1 bis 16, **dadurch gekennzeichnet, dass** zu seiner Initialisierung Steuervektoren an der Teilnehmerstation und Gewichtungsvektoren an der Basisstation unabhängig voneinander abgeschätzt werden (S70-S73).

20. Verfahren nach einem der Ansprüche 1 bis 16, **dadurch gekennzeichnet, dass** zur Initialisierung feste, vorbestimmte Steuervektoren verwendet werden.

21. Teilnehmerstation (MSk) zur Durchführun des Verfahrens nach einem der vorhergehenden Ansprüche 1-20, **gekennzeichnet durch** eine Mess- und Verarbeitungseinheit zum Abschätzen der Richtung eines Steuervektors in einem M-dimensionalen Vektorraum anhand von Messungen des Downlinksignals, zum Vergleichen der abgeschätzten Richtung mit der Richtung eines Referenz-Steuervektors und zum Übertragen einer für die Änderung repräsentativen Information an eine Basisstation.

22. Verfahren zur Übertragung von Rückkopplungsinformation für die Strahlformung in einem Funk-Kommunikationssystem mit Teilnehmerstationen (MSk, MS1, MS2,...) und einer Basisstation (BS), die eine Antenneneinrichtung (AE) mit mehreren Antennenelementen ($AE_1$ bis $AE_M$) aufweist, die ein Downlinksignal jeweils gewichtet mit Koeffizienten (($W_i)_j$, j=1, ..., M) eines aktuellen Gewichtungsvektors ($W_i$) an eine Teilnehmerstation (MSk) abstrahlen, wobei der aktuelle Gewichtungsvektor ($W_i$) anhand der Rückkopplungsinformation von der Teilnehmerstation (MSk) aktualisiert wird, **gekennzeichnet durch** die Schritte

a) Abschätzen (S60) der Richtung eines Steuervektors ($S_i$) durch die Teilnehmerstation (MSk) anhand von Messungen des Downlinksignals;

b') Normieren (S61) des Steuervektors ($S_i$) anhand einer Normierungsvorschrift;

c') Übertragen der Komponenten (S62) des Steuervektors ($S_i$) mit Ausnahme einer vorgegebenen Komponente an die Basisstation (BS);

d') Wiederherstellen (S63) des Steuervektors ($S_i$) an der Basisstation (BS) anhand der Normierungsvorschrift.

23. Verfahren nach Anspruch 22, **dadurch gekennzeichnet, dass** die Normierungsvorschrift die Normierung der vorgegebenen Komponente auf einen festen Wert beinhaltet.

24. Verfahren nach Anspruch 22 oder 23, **dadurch gekennzeichnet, dass** wenigstens das signifikanteste Bit jeder Komponente mehrfach übertragen wird.

25. Teilnehmerstation zur Durchführung des Verfahren nach einem der vorhergehenden Ansprüche 22-24, **gekennzeichnet durch** eine Mess- und Verarbeitungseinheit zum Abschätzen der Richtung eines Steuervektors in einem M-dimensionalen Vektorraum anhand von Messungen des Downlinksignals; zum Normieren des Steuervektors ($S_i$) anhand einer Normierungsvorschrift und zum Übertragen der Komponenten des Steuervektors ($S_i$) mit Ausnahme einer vorgegebenen Komponente an eine Basisstation (BS).

## Revendications

1. Procédé de transmission d'une information de rétroaction pour la formation d'un rayon dans un système de radiocommunication comprenant des stations d'abonné (MSk, MS1, MS2, ...) et une station de base (BS) qui comporte un dispositif d'antenne (AE) avec plusieurs éléments d'antenne ($AE_1$ à $AE_M$) qui rayonnent un signal descendant respectivement pondéré avec des coefficients ($(W_i)_j$, j = 1, ..., M) d'un vecteur de pondération actuel ($W_i$) vers une station d'abonné (MSk), le vecteur de pondération actuel ($W_i$) étant actualisé à l'aide de l'information de rétroaction de la station d'abonné (MSk), **caractérisé par** les étapes suivantes:

   a) estimation (S1) de la direction d'un vecteur de commande ($S_i'$) dans un espace vectoriel à M dimensions par la station d'abonné (MSk) à l'aide de mesures du signal descendant;

   b) détermination (S3; S22, S23, S24; S30 - S34) d'une modification ($D_i$, $\Delta_i$) de la direction estimée à l'étape a) (S1) avec la direction d'un vecteur de commande de référence ($S_i$) ;

   c) transmission (S4; S11; S35), à la station de base, d'une information représentative de la modification en tant qu'information de rétroaction et

   d) adaptation (S5; S12; S37) du vecteur de pondération ($W_i$) à l'aide de l'information représentative.

2. Procédé selon la revendication 1, **caractérisé en ce que** le vecteur de commande ($S_i$) et le vecteur de pondération ($W_i$) sont des vecteurs parallèles.

3. Procédé selon la revendication 2, **caractérisé en ce que** l'information représentative de la modification est une différence vectorielle ($D_i$, $\Delta_i$) entre ce qu'on appelle un nouveau vecteur de commande ($S_i'$) qui a la direction estimée et le vecteur de commande de référence ($S_i$) .

4. Procédé selon la revendication 3, **caractérisé en ce que** les composantes de la différence vectorielle ($\Delta_i$) sont limitées à deux valeurs qui correspondent respectivement à une différence positive resp. négative entre les composantes correspondantes du vecteur de commande de référence et le nouveau vecteur de commande.

5. Procédé selon l'une des revendications précédentes, **caractérisé en ce qu'**est affectée au vecteur de commande ($S_i$) une valeur qui est déterminée de sorte à être d'autant plus petite que la vitesse à laquelle se modifie la direction du vecteur de commande est grande.

6. Procédé selon l'une des revendications 1 à 4, **caractérisé en ce que** l'étendue de l'adaptation du vecteur de pondération est déterminée de sorte à être d'autant plus grande que la vitesse à laquelle se modifie la direction du vecteur de commande est grande.

7. Procédé selon la revendication 6 et la revendication 3 ou 4, **caractérisé en ce qu'**est calculé un incrément (d) (S31 - S33) et **en ce que** l'adaptation du vecteur de pondération se fait en y ajoutant la différence vectorielle ($D_i$, $\Delta_i$)

multipliée par l'incrément (S37).

8.  Procédé selon l'une des revendications précédentes, **caractérisé en ce que** les étapes a à d sont répétées périodiquement.

9.  Procédé selon la revendication 8, **caractérisé en ce qu'**on fait d'un vecteur de commande ($S_i$') obtenu à l'étape a le vecteur de commande de référence ($S_i$) pour une période suivante du procédé (S6).

10. Procédé selon la revendication 8, **caractérisé en ce que** le vecteur de commande de référence ($S_i$) est une image réfléchie du vecteur de pondération ($W_i$) au niveau de la station d'abonné (MSk) et **en ce que** le vecteur de commande de référence ($S_i$) est adapté à l'aide de l'information représentative de la même manière que le vecteur de pondération ($W_i$) (S13, S38).

11. Procédé selon la revendication 10, **caractérisé en ce que** la station d'abonné (MSk) effectue une estimation du vecteur de pondération ($W_i$) utilisé par la station de base (BS) (S51) et, en cas d'écart entre le vecteur de pondération ($W_i$) et le vecteur de commande de référence ($S_i$), adapte ce dernier (S53).

12. Procédé selon l'une des revendications 8 à 11, **caractérisé en ce que** le vecteur de commande ($S_i$) et le vecteur de pondération ($W_i$) sont multipliés périodiquement par un facteur d'oubli (S50), le facteur d'oubli étant un nombre réel compris entre 0 et 1 et de préférence proche de 1.

13. Procédé selon la revendication 12, **caractérisé en ce que** le facteur d'oubli est une constante.

14. Procédé selon la revendication 12, **caractérisé en ce que** le facteur d'oubli est une fonction de la valeur d'au moins un vecteur de commande ($S_i$).

15. Procédé selon l'une des revendications précédentes, **caractérisé en ce que** les composantes des vecteurs de commande et des vecteurs de pondération sont de valeur complexe.

16. Procédé selon la revendication 15, **caractérisé en ce que** les composantes des vecteurs de commande et des vecteurs de pondération se composent d'une valeur et d'une phase.

17. Procédé selon l'une des revendications précédentes, **caractérisé en ce que**, pour son initialisation, les composantes de vecteurs de commande ($S_i$) estimés par la station d'abonné (MSk) sont transmises à la station de base (BS) pour utilisation en tant que vecteurs de pondération ($W_i$) (S62).

18. Procédé selon la revendication 17, **caractérisé en ce que**, lors de l'initialisation, les composantes des vecteurs de commande sont transmis avec une précision inférieure à celle avec laquelle elles sont estimées par la station d'abonné.

19. Procédé selon l'une des revendications 1 à 16, **caractérisé en ce que** sont estimés indépendamment l'un de l'autre, pour son initialisation, des vecteurs de commande au niveau de la station d'abonné et des vecteurs de pondération au niveau de la station de base (S70 - S73).

20. Procédé selon l'une des revendications 1 à 16, **caractérisé en ce que** sont utilisés, pour l'initialisation, des vecteurs de commande fixes prédéterminés.

21. Station d'abonné (MSk) permettant d'exécuter le procédé selon l'une des revendications précédentes 1 à 20, **caractérisée par** une unité de mesure et de traitement pour estimer la direction d'un vecteur de commande dans un espace vectoriel à M dimensions à l'aide de mesures du signal descendant, pour comparer la direction estimée avec la direction d'un vecteur de commande de référence et pour transmettre à une station de base une information représentative de la modification.

22. Procédé de transmission d'une information de rétroaction pour la formation d'un rayon dans un système de radiocommunication comprenant des stations d'abonné (MSk, MS1, MS2, ...) et une station de base (BS) qui comporte un dispositif d'antenne (AE) avec plusieurs éléments d'antenne ($AE_1$ à $AE_M$) qui rayonnent un signal descendant respectivement pondéré avec des coefficients (($W_i$)$_j$, j = 1, ..., M) d'un vecteur de pondération actuel ($W_i$) vers une station d'abonné (MSk), le vecteur de pondération actuel ($W_i$) étant actualisé à l'aide de l'information de rétroaction de la station d'abonné (MSk), **caractérisé par** les étapes suivantes:

a) estimation (S60) de la direction d'un vecteur de commande ($S_i$') par la station d'abonné (MSk) à l'aide de mesures du signal descendant;

b') normalisation (S61) du vecteur de commande ($S_i$) à l'aide d'une règle de normalisation;

c') transmission (S62), à la station de base (BS), des composantes du vecteur de commande ($S_i$) à l'exception d'une composante prédéterminée;

d') reconstruction (S63) du vecteur de commande ($S_i$) au niveau de la station de base (BS) à l'aide de la règle de normalisation.

**23.** Procédé selon la revendication 22, **caractérisé en ce que** la règle de normalisation contient la normalisation, sur une valeur fixe, de la composante prédéterminée.

**24.** Procédé selon la revendication 22 ou 23, **caractérisé en ce qu'**au moins le bit le plus significatif de chaque composante est transmis plusieurs fois.

**25.** Station d'abonné permettant d'exécuter le procédé selon l'une des revendications précédentes 22 à 24, **caractérisée par** une unité de mesure et de traitement pour estimer la direction d'un vecteur de commande dans un espace vectoriel à M dimensions à l'aide de mesures du signal descendant, pour normaliser le vecteur de commande ($S_i$) à l'aide d'une règle de normalisation et pour transmettre à une station de base (BS) les composantes du vecteur de commande ($S_i$) à l'exception d'une composante prédéterminée.

**Claims**

**1.** Method for the transmission of feedback information for beam shaping in a radio communication system with subscriber stations (MSk, MS1, MS2, ...) and a base station (BS), that has antenna device (AE) with a plurality of antenna elements ($AE_1$ to $AE_M$) that emits a downlink signal weighted in each case with coefficients (($W_i)_j$, j=1, ..., M) of an actual weighting vector ($W_i$) to a subscriber station (MSk), with the actual weighting vector ($W_i$) being updated by means of feedback information from the subscriber station (MSk),
**characterised by** the steps

a) estimation (S1) of the direction of a control vector ($S_i$') in an M-dimensional vector space by the subscriber station (MSk) by measurements of the downlink signal;

b) determining (S3; S22, S23, S24; S30-S34) a change ($D_i$, $\Delta_i$) of the direction estimated in step a) (S1) using the direction of a reference control vector ($S_i$);

c) transmitting (S4; S11; S35) information representative of the change to the base station as feedback information and

d) matching (S5; S12; S37) the weighting vector ($W_i$) using the representative information.

**2.** Method in accordance with claim 1, **characterised in that** the control vector ($S_i$) and weighting vector ($W_i$) are parallel vectors.

**3.** Method in accordance with claim 2, **characterised in that** the information representative of the change is a vectorial difference ($D_i$, $\Delta_i$) between a so-called new control vector ($S_i$') that has the estimated direction and the reference control vector ($S_i$) .

**4.** Method in accordance with claim 3, **characterised in that** the components of the vectorial difference ($\Delta_i$) are limited to two values corresponding in each case to a positive or negative difference between the corresponding components of the reference control vector and of the new control vector.

**5.** Method in accordance with one of the preceding claims, **characterised in that** an amount is assigned to the control vector ($S_i$) that is set smaller the faster the direction of the control vector changes.

**6.** Method in accordance with one of claims 1 to 4, **characterised in that** the extent of the matching of the weighting vector is set greater the faster the direction of the control vector changes.

**7.** Method in accordance with claim 6 and claim 3 or 4, **characterised in that** a step width (d) is calculated (S31-S33), and that the matching of the weighting vector is achieved by adding the vectorial difference ($D_i$, $\Delta_l$), multiplied by the step width (S37).

8. Method in accordance with one of the preceding claims, **characterised in that** steps a to d are periodically repeated.

9. Method in accordance with claim 8, **characterised in that** a control vector ($S_i'$) received in step a, is taken as a reference control vector ($S_i$) for a succeeding period of the method (S6).

10. Method in accordance with claim 8, **characterised in that** the reference control vector ($S_i$) is an image of the weighting vector ($W_i$) reflected at the subscriber station (MSk), and that the reference control vector ($S_i$) is matched using the representative information in the same way as the weighting vector ($W_i$) is adapted (S13, S38).

11. Method in accordance with claim 10, **characterised in that** the subscriber station (MSk) performs an estimation of the weighting vector ($W_i$) used by the base station (BS) (S51) and if there is a deviation between the weighting vector ($W_i$) and the reference control vector ($S_i$) adapts the latter (S53).

12. Method in accordance with one of claims 8 to 11, **characterised in that** the control vector ($S_i$) and the weighting vector ($W_i$) are periodically multiplied by a forget factor (S50), with the forget factor being a real number between 0 and 1 and preferably close to 1.

13. Method in accordance with claim 12, **characterised in that** the forget factor is a constant.

14. Method in accordance with claim 12, **characterised in that** the forget factor is a function of the amount of at least one control vector ($S_i$) .

15. Method in accordance with one of the preceding claims, **characterised in that** the components of the control vectors and weighting vectors are complex-significant.

16. Method in accordance with claim 15, **characterised in that** the components of the control vectors and weighting vectors consist of an amount and phase.

17. Method in accordance with one of the preceding claims, **characterised in that** the components of the control vectors ($S_i$) estimated by the subscriber station (MSk) are transmitted to the base station (BS) for use as weighting vectors ($W_i$) (S62).

18. Method in accordance with claim 17, **characterised in that** during the initialisation the components of the control vectors are transmitted with a lesser accuracy than estimated by the subscriber station.

19. Method in accordance with one of claims 1 to 16, **characterised in that**, for their initialisation, control vectors are estimated separately from each other at the subscriber station and weighting vectors at the base station (S70-S73).

20. Method in accordance with one of claims 1 to 16, **characterised in that** fixed, predetermined control vectors are used for initialisation.

21. Subscriber station (MSk) for carrying out the method in accordance with one of the preceding claims 1 to 20, **characterised by** a measuring and processing unit for estimating the direction of a control vector in an M-dimensional vector space using measurements of the downlink signal, for comparison of the estimated direction with the direction of a reference control vector and for transmitting information representative of the change to a base station.

22. Method for transmitting feedback information for beam shaping in a radio communication system with subscriber stations (MSk, MS1, MS2, ...) and a base station (BS), that has an antenna device (AE) with a plurality of antenna elements ($AE_1$, to $AE_M$), that emits a downlink signal weighted in each case with coefficients ($(W_i)_j$, j=1, ..., M) of an actual weighting vector ($W_i$) to a subscriber station (MSk), with the actual weighting vector ($W_i$) being updated by means of feedback information from the subscriber station (MSk), **characterised by** the steps

a) estimating (S60) the direction of a control vector ($S_i$) by the subscriber station (MSk) using measurements of the downlink signal;
b') scaling (S61) the control vector ($S_i$) using a scaling rule;

c') transmitting the components (S62) of the control vector ($S_i$), with the exception of a predetermined component, to the base station (BS);

d') restoring (S63) the control vector ($S_i$) at the base station (BS) by means of the scaling rule.

23. Method in accordance with claim 22, **characterised in that** the scaling rule contains the scaling of the predetermined component to a fixed value.

24. Method in accordance with claims 22 or 23, **characterised in that** at least the most significant bit of each component is transmitted several times.

25. Subscriber station for carrying out the method in accordance with one of the preceding claims 22 to 24, **characterised by** a measuring and processing unit for estimating the direction of a control vector in an M-dimensional vector space using measurements of the downlink signal; for scaling the control vector ($S_i$) using a scaling rule and transmitting the components of the control vector ($S_i$), with the exception of a predetermined component, to the base station (BS).

## Fig.1

AE

1 MS

V1

2 MS

V2

k MS   Vk

.. 

n MS

BS

BS

BSC

MSC

PSTN

(Stand der Technik)

# Fig.2

# Fig.3

# Fig.4

**Fig.5**

MSk: $S_1$, $S_2$, ..., $S_m$
BS: $W_1$, $W_2$, ..., $W_m$ ───── S0

# $S_1'$, $S_2'$, ..., $S_m'$ ───── S1

ordnen ───── S2

S3 ───── $D_i = S_i' - S_i$

Berechne $\Delta_i$ ───── S10

S11 ───── $\Delta_i$ senden

$W_i := W_i + \Delta_i$ ───── S12

S13 ───── $S_i + \Delta_i$ als $S_i$ speichern

S50

**Fig.10**

Wi an MSk abschätzen ───── S51

$|W_i - S_i| < lim?$ ───── S52

j

n

$S_i := S_i + b(W_i - S_i)$ ───── S53

# Fig.6

# Fig.7

# Fig.8

S0

MSk: $S_1$, $S_2$, ..., $S_m$
BS: $W_1$, $W_2$, ..., $W_m$

S1

\# $S_1'$, $S_2'$, ..., $S_m'$

S2 — ordnen

S20 — i wählen

S21 — Abweichung > Grenzwert?

n

S22 — $D_i = |S_i|S_i' - \alpha S_i$

S23 — $D_i = |S_i|S_i' - S_i/\alpha$

j

S24 — Berechne $\Delta_i$

S25 — alle i erledigt?

n

S50

j

S11 — $\Delta_i$ senden

S12 — $W_i := W_i + \Delta_i$

S13 — $S_i + \Delta_i$ als $S_i$ speichern

# Fig. 9

Flowchart:

- S0: MSk: $S_1, S_2, ..., S_m$ / BS: $W_1, W_2, ..., W_m$
- S1: # $S_1', S_2', ..., S_m'$
- S2: ordnen
- S20: i wählen
- S30: $D_i = S_i' - S_i$
- S31: Abweichung ≥ Grenzwert?
- S32: d++ (j)
- S33: d-- (n)
- S34: Berechne $\Delta_i$
- S35: $\Delta_i$ senden
- S36: d senden
- S37: $W_i := W_i + d\Delta_i$
- S38: $S_i + d\Delta_i$ als $S_i$ speichern
- S39: alle i erledigt?
- S50

**Fig.11**

# $S_1$, $S_2$, ..., $S_m$ — S60

$S_1$, $S_2$, ..., $S_m$ normieren — S61

verkürzte $S_1$, $S_2$, ..., $S_m$ senden — S62

$S_i$ rekonstruieren, i=1, 2, ..., m — S63

$W_i := S_i$ — S64

**Fig.12**

langfristige Kovarianzmatrix im Uplink messen — S70

Eigenvektoren der Kovarianzmatrix berechnen — S71

ordnen — S72

Berechnete Eigenvektoren als $W_i$ verwenden — S73